# EUROPÄISCHE PATENTSCHRIFT

(11) **EP 3 443 033 B1**
(45) Veröffentlichungstag und Bekanntmachung des Hinweises auf die Patenterteilung: **12.02.2020**
(21) Anmeldenummer: 17717696.3
(22) Anmeldetag: 13.04.2017
(51) Int. Cl.: C08K 5/00, C08K 5/1535

(54) **POLYCARBONAT-ZUSAMMENSETZUNGEN ENTHALTEND ISOSORBIDDIESTER**
POLYCARBONATE COMPOSITIONS COMPRISING ISOSORBIDE ESTER
COMPOSITIONS DE POLYCARBONATE COMPRENANT DES DIESTERS D'ISOSORBIDE

(30) Priorität: 14.04.2016 EP 16165413
(43) Veröffentlichungstag der Anmeldung: 20.02.2019
(73) Patentinhaber: Covestro Deutschland AG, 51373 Leverkusen (DE)
(72) Erfinder: HEUER, Helmut, Werner, 57074 Siegen (DE); WEHRMANN, Rolf, 47800 Krefeld (DE); BOUMANS, Anke, 47574 Goch (DE)
(74) Vertreter: Levpat
(86) Internationale Anmeldenummer: PCT/EP2017/058920
(87) Internationale Veröffentlichungsnummer: WO 2017/178583

(56) Entgegenhaltungen:
- DE-A1-102007 006 442
- DE-A1-102010 002 856
- DATABASE CA [Online] CHEMICAL ABSTRACTS SERVICE, COLUMBUS, OHIO, US; 18. Dezember 2014 (2014-12-18), GUI, ZONGYAN ET AL: "Biodegradable polylactic acid resin composition with good toughness and flexibility and article thereof", XP002761864, gefunden im STN Database accession no. 2014:2096825 -& CN 104 212 135 A (TORAY ADVANCED MATERIALS RES LAB CHINA CO LTD) 17. Dezember 2014 (2014-12-17)

## Beschreibung

Die Erfindung betrifft Zusammensetzungen enthaltend Polycarbonat und Carbonsäureester des Isosorbids, die Verwendung der Zusammensetzungen zur Herstellung von Blends oder Formteilen sowie daraus erhältliche Formteile. Die Zusammensetzungen weisen verbesserte rheologische und optische Eigenschaften sowie ein verbessertes Entformungs- und Verarbeitungsverhalten im Spritzguß auf.

Insbesondere für dünnwandige (Gehäuse-)Teile, etwa in Ultrabooks, Smartphones oder Smartbooks, ist eine niedrige Schmelzeviskosität erforderlich, damit Bauteile mit gleichmäßiger Wandstärke realisiert werden können. Weitere Anwendungsbereiche, in denen gute Fließfähigkeiten gefordert werden, sind im Automobilbereich (z. B. Scheinwerferabdeckungen, Blenden, Lichtleitsysteme), im E/E-Bereich (Beleuchtungskomponenten, Gehäuseteile, Abdeckungen, smart meter Anwendungen).

Herkömmlich wird zur Fließverbesserung Bisphenol A-Diphosphat (BDP) verwendet, und zwar in Mengen von bis zu mehr als 10 Gew.-%, um den gewünschten Effekt zu erzielen. Dadurch wird aber die Wärmeformbeständigkeit stark herabgesetzt. Dieser Effekt ist beispielsweise in JP201178889 und WO 2015135958 beschrieben.

DE102010002856 beschreibt die Verwendung von Isosorbitestern als Weichmacher in laminierten Scheiben.

US20120178858 offenbart eine Isosorbit enthaltende plastifizierte Stärke.

Es findet sich jedoch kein Hinweis auf den Einfluss von geringen Mengen Isosorbiddiestern auf die rheologischen und optischen Eigenschaften von Polycarbonaten.

Im Stand der Technik findet der Fachmann keinen Hinweis darauf, wie er bei annähernd gleicher Wärmeformbeständigkeit die Fließfähigkeit und gleichzeitig die optischen Eigenschaften von Polycarbonatzusammensetzungen verbessern kann.

Es bestand daher die Aufgabe, Zusammensetzungen enthaltend aromatische Polycarbonatzusammensetzungen zu finden, die bei nahezu gleich bleibender Wärmeformbeständigkeit verbesserte optische Eigenschaften und gleichzeitig eine verbesserte Fließfähigkeit aufweisen.

Überraschenderweise wurde gefunden, dass Polycarbonatzusammensetzungen immer dann eine verbesserte Fließfähigkeit und bessere optische Eigenschaften aufweisen, wenn bestimmte Mengen von Isosorbiddiestern enthalten sind. Dabei bleibt die Wärmeformbeständigkeit (Vicat Temperatur) nahezu unverändert erhalten. Gleichzeitig werden der Gleit- und Haftreibungskoeffizient reduziert, was ein besseres Entformungs- und Verarbeitungsverhalten im Spritzguss bedeutet.

Die Polycarbonatzusammensetzungen, welchen die Isosorbiddiester zugesetzt wurden, zeigen gute Schmelzestabilitäten mit verbesserten rheologischen Eigenschaften, und zwar eine höhere Schmelzevolumenfließrate (MVR), bestimmt nach DIN EN ISO 1133 (bei einer Prüftemperatur von 300 °C, Masse 1,2 kg), eine verbesserte Schmelzeviskosität, bestimmt nach ISO 11443, und verbesserte optische Eigenschaften, messbar an einem niedrigeren Yellowness Index (YI) und/oder eine höhere optische Transmission, bestimmt nach ASTM E 313, im Vergleich zu entsprechenden Zusammensetzungen, die ansonsten dieselben Komponenten außer den Isosorbiddiestern enthalten. Dabei zeichnen sich die Zusammensetzungen weiterhin durch gute mechanische Eigenschaften aus, messbar anhand der Kerbschlagzähigkeit, welche nach ISO 7391/180A bestimmt wird.

Gegenstand der vorliegenden Erfindung sind daher Zusammensetzungen enthaltend A) 20,0 Gew.-% bis 99,95 Gew.-% aromatisches Polycarbonat und B) 0,05 Gew.-% bis 20,0 Gew.-% Isosorbiddiester mit der Maßgabe, dass, wenn es sich bei dem aromatischen Polycarbonat der Komponente A) um ein oder mehrere Copolycarbonate enthaltend mindestens die Monomereinheiten der Formel (1), 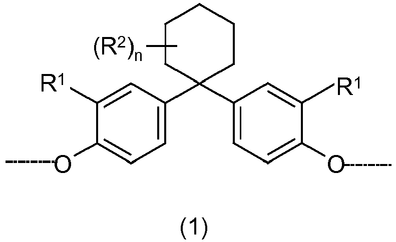 worin
R¹ für Wasserstoff oder C₁-C₄-Alkyl steht,
R² für C₁-C₄-Alkyl steht, und
n für 0, 1, 2 oder 3 steht,
handelt, die Zusammensetzung 0,05 bis 7,5 Gew.-% der Komponente B) umfasst. Vorzugsweise weisen die Zusammensetzungen
A) 20,0 Gew.-% bis 99,95 Gew.-% aromatisches Polycarbonat,
B) 0,05 Gew.-% bis 20,0 Gew.-% Isosorbiddiester,
C) 0,0 Gew.-% bis 1,0 Gew.-% Thermostabilisator und
D) 0,0 Gew.-% bis 3,0 Gew.-% weitere Additive auf
mit der Maßgabe, dass, wenn es sich bei dem aromatischen Polycarbonat der Komponente A) um ein oder mehrere Copolycarbonate enthaltend mindestens die Monomereinheiten der Formel (1), 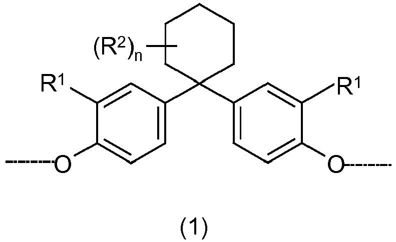 worin
R¹ für Wasserstoff oder C₁-C₄-Alkyl steht,
R² für C₁-C₄-Alkyl steht, und
n für 0, 1, 2 oder 3 steht,
handelt, die Zusammensetzung 0,05 bis 7,5 Gew.-% der Komponente B) umfasst.

Besonders bevorzugt bestehen solche Zusammensetzungen aus
A) 82,0 Gew.-% bis 99,95 Gew.-% aromatischem Polycarbonat,
B) 0,05 Gew.-% bis 15,0 Gew.-% Isosorbiddiester,
C) 0,0 Gew.% bis 1,0 Gew.-% Thermostabilisator und
D) 0,0 Gew.% bis 2,0 Gew.-% eines oder mehrerer weiterer Additive aus der Gruppe der Antioxidantien, Entformungsmittel, Flammschutzmittel, UV-Absorber, IR-Absorber, Antistatika, optischen Aufheller, Farbmittel aus der Gruppe der löslichen organischen Pigmente und Additive zur Lasermarkierung
mit der Maßgabe, dass, wenn es sich bei dem aromatischen Polycarbonat der Komponente A) um ein oder mehrere Copolycarbonate enthaltend mindestens die Monomereinheiten der Formel (1), 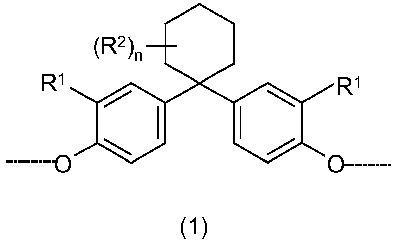 worin
R¹ für Wasserstoff oder C₁-C₄-Alkyl steht,
R² für C₁-C₄-Alkyl steht, und
n für 0, 1, 2 oder 3 steht,
handelt, die Zusammensetzung 0,05 bis 7,5 Gew.-% der Komponente B) umfasst..

Unter "aromatischem Polycarbonat" im erfindungsgemäßen Sinne werden sowohl Homopolycarbonate als auch Copolycarbonate verstanden. Dabei können die Polycarbonate in bekannter Weise linear oder verzweigt sein. Erfindungsgemäß können auch Mischungen von Polycarbonaten verwendet werden.

Vorzugsweise sind die erfindungsgemäßen Zusammensetzungen transparent.

Durch die Verwendung der Isosorbiddiester in transparenten Polycarbonatzusammensetzungen lassen sich die optischen Eigenschaften verbessern. Durch Zusatz der Isosorbiddiester werden die Transmission, bestimmt nach ISO 13468 bei 4 mm Dicke, erhöht und gleichzeitig der Yellowness-Index Y.I., bestimmt nach ASTM E 313 (Beobachter: 10° / Lichtart: D65, an einer Musterplatte von 4 mm Dicke), gesenkt.

"Transparent" im erfindungsgemäßen Sinn bedeutet, dass die Zusammensetzungen im Bereich von 400 nm bis 800 nm eine Transmission von mindestens 84% bestimmt nach ISO 13468 bei einer Dicke von 4 mm und eine Trübung < 5% bestimmt nach ASTM D1003 bei einer Schichtdicke von 4 mm, aufweisen.

C₁-C₄-Alkyl steht im Rahmen der Erfindung beispielsweise für Methyl, Ethyl, n-Propyl, iso-Propyl, n-Butyl, sec.-Butyl, tert.-Butyl, C₁-C₆-Alkyl darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, C₁-C₁₀-Alkyl darüber hinaus beispielsweise für n-Heptyl und n-Octyl, Pinakyl, Adamantyl, die isomeren Menthyle, n-Nonyl, n-Decyl, C₁-C₃₄-Alkyl darüber hinaus beispielsweise für n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

Aryl steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für C₆-C₃₄-Aryl sind Phenyl, o-, p-, m-Tolyl, Naphthyl, Phenanthrenyl, Anthracenyl oder Fluorenyl.

Arylalkyl bzw. Aralkyl bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Im Rahmen der vorliegenden Erfindung beziehen sich die angegebenen Gew.-% der Komponenten A, B, C und D - soweit nicht explizit anders angegeben - jeweils auf das Gesamtgewicht der Zusammensetzung. Die Zusammensetzung kann neben den Komponenten A, B, C und D weitere Komponenten enthalten. In einer bevorzugten Ausführungsform enthält die Zusammensetzung keine weiteren Komponenten, sondern die Komponenten A) bis D) ergänzen sich zu 100 Gew.-%; d.h. die Zusammensetzung besteht aus den Komponenten A, B, C und D.

Die erfindungsgemäßen Zusammensetzungen werden vorzugsweise zur Herstellung von Formteilen verwendet. Die Zusammensetzungen weisen bevorzugt eine Schmelze-Volumenfließrate (MVR) von 2 bis 120 cm³/10 min, weiter bevorzugt von 3 bis 90 cm³/10 min, bestimmt nach ISO 1133 (Prüftemperatur 300°C, Masse 1,2 kg), auf.

Die einzelnen Bestandteile der erfindungsgemäßen Zusammensetzungen sind im Folgenden noch näher erläutert:

### Komponente A

Die erfindungsgemäße Zusammensetzung enthält als Komponente A 20,0 Gew.-% bis 99,0 Gew.-% aromatisches Polycarbonat. Vorzugsweise beträgt die Menge des aromatischen Polycarbonats in der Zusammensetzung wenigstens 50 Gew.-%, besonders bevorzugt wenigstens 60 Gew.-% und ganz besonders bevorzugt wenigstens 75 Gew.-%, wobei ein einzelnes Polycarbonat oder eine Mischung mehrerer Polycarbonate vorliegen kann.

Die Herstellung der Polycarbonate, die in den Zusammensetzungen enthalten sind, welchen Diglycerolester zur Verbesserung der Fließfähigkeit zugesetzt wird, erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 299 verwiesen.

Die Herstellung aromatischer Polycarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich.

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine abgeleitet von Isatin- oder Phenolphthaleinderivaten sowie deren kernalkylierte, kernarylierte und kernhalogenierte Verbindungen.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan (Dimethyl-Bisphenol A), Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (I) bis (III) 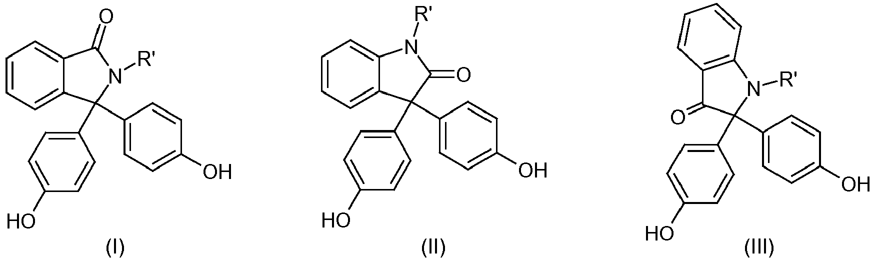 in denen R' jeweils für C₁-C₄-Alkyl, Aralkyl oder Aryl, bevorzugt für Methyl oder Phenyl, ganz besonders bevorzugt für Methyl, steht.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A sowie die Diphenole der Formeln (I), (II) und (III).

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan, sowie von den Diphenolen der Formeln (I), (II) und (III) 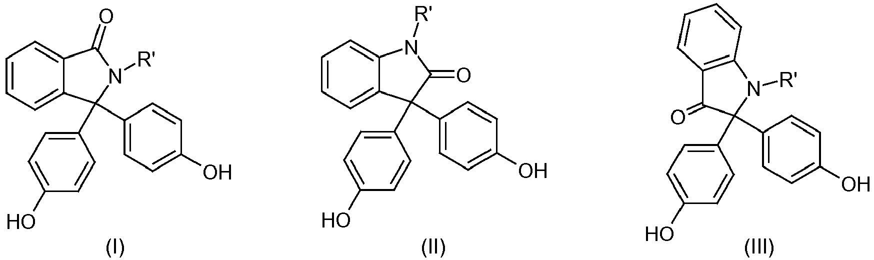 in denen R' jeweils für C₁-C₄-Alkyl, Aralkyl oder Aryl, bevorzugt für Methyl oder Phenyl, ganz besonders bevorzugt für Methyl, steht,
abgeleitete Homo- oder Copolycarbonate, vorzugsweise mit Bisphenol A als Comonomer.

Zur Einarbeitung von Additiven wird die Komponente A bevorzugt in Form von Pulvern, Granulaten oder aus Gemischen aus Pulvern und Granulaten eingesetzt.

Als Polycarbonat kann auch eine Mischung aus verschiedenen Polycarbonaten eingesetzt werden, z.B. aus den Polycarbonaten A1 und A2:
Die Menge des aromatischen Polycarbonats A1 beträgt, bezogen auf die Gesamtmenge an Polycarbonat, 25,0 bis 85,0 Gew.-%, bevorzugt 28,0 bis 84,0 Gew.-%, besonders bevorzugt 30,0 bis 83,0 Gew.-%, wobei dieses aromatische Polycarbonat auf Basis von Bisphenol A mit einer bevorzugten Schmelze-Volumenfließrate MVR von 7 bis 15 cm³/10 min, weiter bevorzugt mit einer Schmelze-Volumenfließrate MVR von 8 bis 12 cm³/10 min und besonders bevorzugt mit einer Schmelze-Volumenfließrate MVR von 8 bis 11 cm³/10 min, bestimmt gemäß ISO 1133 (Prüftemperatur 300°C, Masse 1,2 kg), ist.

Die Menge des pulverförmigen aromatischen Polycarbonats A2 beträgt, bezogen auf die Gesamtmenge an Polycarbonat, 3,0 bis 12,0 Gew.-%, bevorzugt 4,0 bis 11,0 Gew.-%, besonders bevorzugt 3,0 bis 10,0 Gew.-%, wobei dieses aromatische Polycarbonat bevorzugt auf Basis von Bisphenol A mit einer bevorzugten Schmelze-Volumenfließrate MVR von 3 bis 8 cm³/10 min, weiter bevorzugt mit einer Schmelze-Volumenfließrate MVR von 4 bis 7 cm³/10 min, und besonders bevorzugt mit einer Schmelze-Volumenfließrate MVR von 6 cm³/10 min, bestimmt gemäß ISO 1133 (Prüftemperatur 300°C, Masse 1,2 kg), ist.

In einer bevorzugten Ausführungsform enthält die Zusammensetzung als Komponente A ein Copolycarbonat umfassend eine oder mehrere Monomereinheiten der Formel (1), 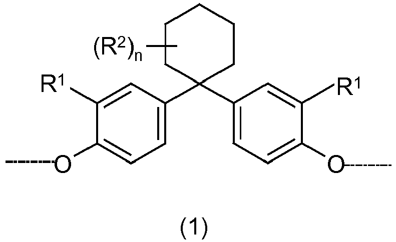 wobei
R¹ für Wasserstoff oder C₁-C₄-Alkyl, bevorzugt für Wasserstoff steht,
R² für C₁-C₄-Alkyl, bevorzugt Methyl steht,
n für 0, 1, 2 oder 3, bevorzugt 3 steht, und

optional in Kombination mit einem weiteren aromatischen Homo- oder Copolycarbonat, enthaltend eine oder mehrere Monomereinheiten der allgemeinen Formel (2), 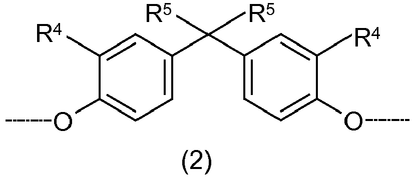 wobei
R⁴ für H, lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für H oder C₁-Alkyl (Methyl) steht, und
R⁵ für lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für C₁-Alkyl (Methyl) steht;
und wobei das gegebenenfalls zusätzliche vorhandene weitere Homo- oder Copolycarbonat keine Monomereinheiten der Formel (1) aufweist. In dieser Ausführungsform umfasst die erfindungsgemäße Zusammensetzung nur 0,05 bis 7,5 Gew.-%, bevorzugt 0,05 bis 6 Gew.-%, besonders bevorzugt 0,05 bis 5 Gew.-% und ganz besonders bevorzugt 0,05 bis 1 Gew.-% der Komponente B).

Die Monomereinheit(en) der allgemeinen Formel (1) führt man über ein oder mehrere entsprechenden Diphenole der allgemeinen Formel (1') ein: 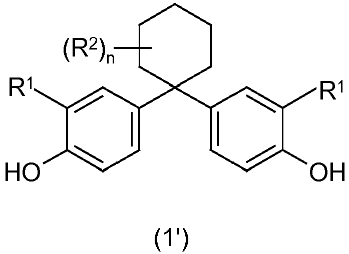 in der
R¹ für Wasserstoff oder C₁-C₄-Alkyl, bevorzugt Wasserstoff,
R² für C₁-C₄-Alkyl, bevorzugt Methyl, und
n für 0, 1, 2 oder 3, bevorzugt 3 stehen.

Die Diphenole der Formeln (1') und ihr Einsatz in Homopolycarbonaten sind beispielsweise aus DE 3918406 bekannt.

Besonders bevorzugt ist 1,1-Bis-(4-hydroxyphenyl)-3,3,5-trimethylcyclohexan (Bisphenol TMC) mit der Formel (1a):

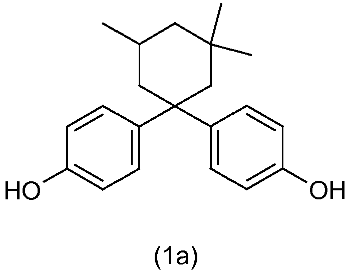

Neben ein oder mehreren Monomereinheiten der Formel (1) können in dem Copolycarbonat ein oder mehrere Monomereinheit(en) der Formel (3) enthalten sein: 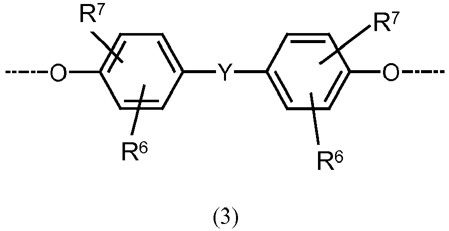 in der
R⁶ und R⁷ unabhängig voneinander für H, C₁-C₁₈-Alkyl-, C₁-C₁₈-Alkoxy, Halogen wie Cl oder Br oder für jeweils gegebenenfalls substituiertes Aryl oder Aralkyl, bevorzugt für H oder C₁-C₁₂-Alkyl, besonders bevorzugt für H oder C₁-C₈-Alkyl und ganz besonders bevorzugt für H oder Methyl stehen, und
Y für eine Einfachbindung, -SO₂-, -CO-, -O-, -S-, C₁-C₆-Alkylen oder C₂-C₅-Alkyliden, ferner für C₆-C₁₂-Arylen, welches gegebenenfalls mit weiteren Heteroatome enthaltenden aromatischen Ringen kondensiert sein kann, steht.

Die Monomereinheit(en) der allgemeinen Formel (3) führt man über ein oder mehrere entsprechenden Diphenole der allgemeinen Formel (3a) ein: 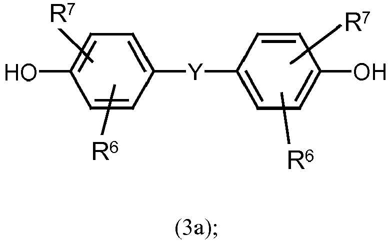 wobei R⁶, R⁷ und Y jeweils die bereits im Zusammenhang mit der Formel (3) erwähnte Bedeutung haben.

Ganz besonders bevorzugte Diphenole der Formel (3a) sind Diphenole der allgemeinen Formel (3b), 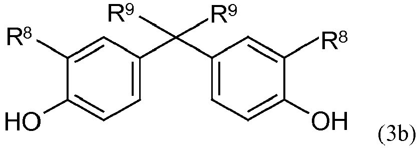
in der R⁸ für H, lineare oder verzweigte C₁-C₁₀ -Alkyl, bevorzugt lineare oder verzweigte C₁-C₆-Alkyl, besonders bevorzugt für lineare oder verzweigte C₁-C₄-Alkyl, ganz besonders bevorzugt für H oder C₁-Alkyl (Methyl) steht, und
in der R⁹ für lineare oder verzweigte C₁-C₁₀-Alkyl, bevorzugt lineare oder verzweigte C₁-C₆-Alkyl, besonders bevorzugt für lineare oder verzweigte C₁-C₄-Alkyl, ganz besonders bevorzugt für C₁-Alkyl (Methyl) steht.

Hierbei ist insbesondere das Diphenol (3c) ganz besonders bevorzugt.

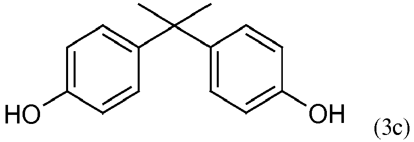

Die Diphenole der allgemeinen Formeln (3a) können sowohl allein als auch im Gemisch miteinander verwendet werden. Die Diphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Der Gesamtanteil der Monomereinheiten der Formel (1) im Copolycarbonat beträgt vorzugsweise 0,1 - 88 mol-%, besonders bevorzugt 1 - 86 mol-%, ganz besonders bevorzugt 5 - 84 mol-% und insbesondere 10 - 82 mol-% (Summe Mole der Diphenole der Formel (1') bezogen auf die Summe der Mole aller eingesetzten Diphenole).

Copolycarbonate können als block- und statistische Copolycarbonate vorliegen. Besonders bevorzugt sind statistische Copolycarbonate. Dabei ergibt sich das Verhältnis der Häufigkeit der Diphenolat-Monomereinheiten im Copolycarbonat aus dem Molverhältnis der eingesetzten Diphenole.

Monomereinheiten der allgemeinen Formel (2) führt man über ein Diphenol der allgemeinen Formel (2a) ein: 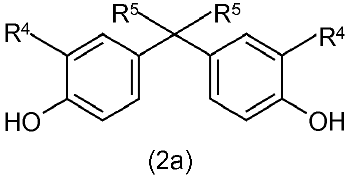
in der R⁴ für H, lineare oder verzweigte C₁-C₁₀-Alkyl, bevorzugt lineare oder verzweigte C₁-C₆ -Alkyl, besonders bevorzugt für lineare oder verzweigte C₁-C₄-Alkyl, ganz besonders bevorzugt für H oder C₁-Alkyl (Methyl) steht und
in der R⁵ für lineare oder verzweigte C₁-C₁₀-Alkyl, bevorzugt lineare oder verzweigte C₁-C₆-Alkyl, besonders bevorzugt für lineare oder verzweigte C₁-C₄-Alkyl, ganz besonders bevorzugt für C₁-Alkyl (Methyl) steht.

Hierbei ist Bisphenol A ganz besonders bevorzugt.

Neben ein oder mehreren Monomereinheiten der allgemeinen Formeln (2) können in dem gegebenenfalls ferner vorhandenen Homo-oder Copolycarbonat ein oder mehrere Monomereinheiten der Formel (3) enthalten sein, wie sie bereits für das Copolycarbonat beschrieben sind.

Soweit die erfindungsgemäße Zusammensetzung Copolycarbonat enthaltend Monomereinheiten der Formel (1) aufweist, so beträgt die Gesamtmenge an Copolycarbonat enthaltend Monomereinheiten der Formel (1) in der Zusammensetzung vorzugsweise mindestens 3,0 Gew.-%, besonders bevorzugt mindestens 5,0 Gew.-%.

In einer bevorzugten Ausführungsform weist die erfindungsgemäße Zusammensetzung als Komponente A einen Blend aus dem Copolycarbonat enthaltend die Monomereinheiten der Formel (1) und einem Bisphenol A basierten Homopolycarbonat auf.

Soweit die erfindungsgemäße Zusammensetzung Copolycarbonat enthaltend Monomereinheiten der Formel (1) aufweist, beträgt der Gesamtanteil der Monomereinheiten der Formel (1) in der Komponente A vorzugsweise 0,1 - 88 mol-%, besonders bevorzugt 1 - 86 mol-%, ganz besonders bevorzugt 5 - 84 mol-% und insbesondere 10 - 82 mol-%, bezogen auf die Summe der Mole aller Monomereinheiten der Formeln (1) und (3) in den ein oder mehreren Polycarbonaten der Komponente A.

In einer weiteren bevorzugten Ausführungsform ist die erfindungsgemäße Zusammensetzung dadurch gekennzeichnet, dass die Menge an Copolycarbonat enthaltend die Monomereinheiten der Formel (1) in der Zusammensetzung mindestens 20 Gew.-% beträgt.

### Komponente B

Die erfindungsgemäßen Zusammensetzungen enthalten als Komponente B wenigstens einen Isosorbiddiester. Auch können unterschiedliche Isomere von Diglycerol Basis für die Ester bilden. Dabei sind Ester auf Basis verschiedener Carbonsäuren geeignet. Anstelle von Reinverbindungen können auch Gemische verwendet werden.

Die allgemeine Formel von Isosorbid, welches die Basis für die erfindungsgemäß eingesetzten Isosorbiddiester bildet, ist die folgende:

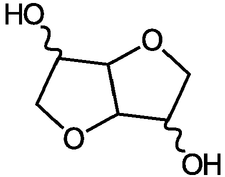

Besonders bevorzugt basieren die erfindungsgemäß eingesetzten Isosorbiddiester auf D-Isosorbit, welches die folgende Formel aufweist:

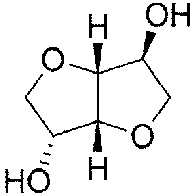

Die erfindungsgemäß in der Zusammensetzung enthaltenen Isosorbiddiester leiten sich vorzugsweise von gesättigten oder ein- oder mehrfach ungesättigten Monocarbonsäuren mit einer Kettenlänge von 4 bis 30 C-Atomen ab.

Geeignete Monocarbonsäuren sind beispielsweise Caprylsäure (C₇H₁₅COOH, Octansäure), Caprinsäure (C₉H₁₉COOH, Decansäure), Laurinsäure (C₁₁H₂₃COOH, Dodecansäure), Myristinsäure (C₁₃H₂₇COOH, Tetradecansäure), Palmitinsäure (C₁₅H₃₁COOH, Hexadecansäure), Margarinsäure (C₁₆H₃₃COOH, Heptadecansäure), Stearinsäure (C₁₇H₃₅COOH, Octadecansäure), Arachinsäure (C₁₉H₃₉COOH, Eicosansäure), Behensäure (C₂₁H₄₃COOH, Docosansäure), Lignocerinsäure (C₂₃H₄₇COOH, Tetracosansäure), Palmitoleinsäure (C₁₅H₂₉COOH, (9Z)-Hexadeca-9-ensäure), Petroselinsäure (C₁₇H₃₃COOH, (6Z)-Octadeca-6-ensäure), (9Z)-Octadeca-9-ensäure), Elaidinsäure (C₁₇H₃₃COOH, (9E)-Octadeca-9-ensäure), Linolsäure (C₁₇H₃₁COOH, (9Z,12Z)-Octadeca-9,12-diensäure), alpha- und gamma-Linolensäure (C₁₇H₂₉COOH, (9Z,12Z,15Z)-Octadeca-9,12,15-triensäure und (6Z,9Z,12Z)-Octadeca-6,9,12-triensäure), Arachidonsäure (C₁₉H₃₁COOH, (5Z,8Z,11Z,14Z)-Eicosa-5,8,11,14-tetraensäure), Timnodonsäure (C₁₉H₂₉COOH, (5Z,8Z,11Z,14Z,17Z)-Eicosa-5,8,11,14,17-pentaensäure) und Cervonsäure (C₂₁H₃₁COOH, (4Z,7Z,10Z,13Z,16Z,19Z)-Docosa-4,7,10,13,16,19-hexaensäure).

Besonders bevorzugt sind gesättigte aliphatische Monocarbonsäuren mit einer Kettenlänge von 4 bis 18 C-Atomen, besonders bevorzugt mit 6 bis 16 C-Atomen und ganz besonders bevorzugt mit 8 bis 14 C-Atomen.

Die Isosorbiddiester kann sich von einer Monocarbonsäure oder von zwei verschiedenen Monocarbonsäuren ableiten. Die Isosorbiddiester können einzeln oder im Gemisch vorliegen.

Die erfindungsgemäß in der Zusammensetzung enthaltenen Isosorbiddiester weisen vorzugsweise die allgemeine Formel (IV) 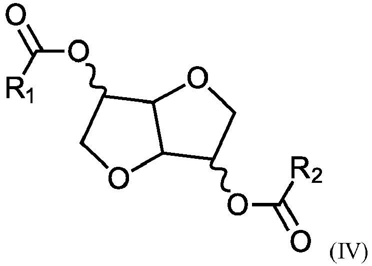 auf und leiten sich von Isosorbid, vorzugsweise D-Isosorbid, sowie gesättigten oder ein-oder mehrfach ungesättigten Monocarbonsäuren der Formeln R₁-COOH und R₂-COOH, wobei R₁ und R₂ gleich oder verschieden sein können.

R₁ und R₂ stehen jeweils bevorzugt für einen gesättigten, verzweigten oder unverzweigten aliphatischen Rest der Formel CₙH₂ₙ₊₁ oder für einen ein- oder mehrfach ungesättigten, verzweigten oder unverzweigten, aliphatischen Rest der Formel CₙH₂ₙ₋ₘ, wobei n für eine Zahl von 3 bis 29 steht und m für 1, 3, 5, 7, 9 oder 11 steht. Aliphatische Reste der Formel CₙH₂ₙ₋ₘ können einfach (m = 1), zweifach (m = 3), dreifach (m = 5), vierfach (m =7), fünffach (m = 9) oder sechsfach (m = 11) ungesättigt sein.

Besonders bevorzugt ist n eine Zahl von 3 bis 17, ganz besonders bevorzugt 5 bis 15, und insbesondere 7 bis 13.

Unverzweigte Alkylreste der Formel CₙH₂ₙ₊₁ sind beispielsweise n-Propyl, n-Butyl, n-Pentyl, n-Hexyl, n-Heptyl, n-Octyl, n-Nonyl, n-Decyl, n-Dodecyl, n-Tridecyl, n-Tetradecyl, n-Hexadecyl oder n-Octadecyl.

Geeignete Isosorbiddiester sind beispielsweise solche, die durch Veresterung von Isosorbid mit Caprylsäure oder Decansäure oder deren Gemisch erhältlich sind, sowie deren Mischungen. Diese sind z. B. von Roquette unter dem Handelsnamen Polysorb ID37 oder Polysorb ID46 kommerziell erhältlich.

Die Polycarbonatzusammensetzungen enthalten bevorzugt 0,05 bis 15,0 Gew.-%, besonders bevorzugt 0,1 bis 10 Gew.-% der Isosorbiddiester. In einer Ausführungsform der Erfindung enthalten die erfindungsgemäßen Zusammensetzungen 0,05 bis 8,0 Gew. %, vorzugsweise 0,1 bis 6,0 Gew.% Isosorbiddiester.

### Komponente C

Als Thermostabilisatoren eignen sich bevorzugt Triphenylphosphin, Tris-(2,4-di-tert-butylphenyl)phosphit (Irgafos® 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox® 1076), Bis-(2,4-dicumylphenyl)-pentaerythritoldiphosphit (Doverphos® S-9228 PC), Bis-(2,6-di-tert-butyl-4-methylphenyl)-pentaerythritoldiphosphit (ADK STAB PEP-36). Sie werden allein oder im Gemisch (z. B. Irganox® B900 (Gemisch aus Irgafos® 168 und Irganox® 1076 im Verhältnis 1:3) oder Doverphos® S-9228 PC mit Irganox® B900 bzw. Irganox® 1076) eingesetzt. Die Thermostabilisatoren werden bevorzugt in Mengen von 0,003 bis 0,2 Gew.-% eingesetzt.

### Komponente D

Zusätzlich sind optional bis zu 2,0 Gew.-%, bevorzugt 0,01 bis 2,0 Gew.-% sonstige übliche Additive ("weitere Additive") enthalten. Die Gruppe der weiteren Additive umfasst keine Thermostabilisatoren, da diese bereits als Komponente C beschrieben sind.

Solche Additive, wie sie üblicherweise bei Polycarbonaten zugesetzt werden, sind insbesondere die in EP-A 0 839 623, WO-A 96/15102, EP-A 0 500 496 oder "Plastics Additives Handbook", Hans Zweifel, 5th Edition 2000, Hanser Verlag, München beschriebenen Antioxidantien, Entformungsmittel, Flammschutzmittel, UV-Absorber, IR-Absorber, Antistatika, optischen Aufheller, Lichtstreumittel, Farbmittel wie organische Pigmente, und/oder Additive zur Lasermarkierung in den für Polycarbonat üblichen Mengen. Diese Additive können einzeln oder auch im Gemisch zugesetzt werden.

Bevorzugte Additive sind spezielle UV-Stabilisatoren, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, BASF, Ludwigshafen), 2-(2'-Hydroxy-5'-(tert.-octyl)-phenyl)-benzotriazol (Tinuvin® 329, BASF, Ludwigshafen),), Bis-(3-(2H-benztriazolyl)-2-hydroxy-5-tert.-octyl)methan (Tinuvin® 360, BASF, Ludwigshafen), 2-(4,6-Diphenyl-1,3,5-triazin-2-yl)-5-(hexyloxy)-phenol (Tinuvin® 1577, BASF, Ludwigshafen), sowie Benzophenone wie 2,4-Dihydroxybenzophenon (Chimasorb® 22 , BASF, Ludwigshafen) und 2-Hydroxy-4-(octyloxy)-benzophenon (Chimassorb® 81, BASF, Ludwigshafen), 2,2-Bis[[(2-cyano-1-oxo-3,3-diphenyl-2-propenyl)oxy]-methyl]-1,3-propandiylester (9CI) (Uvinul® 3030, BASF AG Ludwigshafen), 2-[2-Hydroxy-4-(2-ethylhexyl)oxy]phenyl-4,6-di(4-phenyl)phenyl-1,3,5-triazine (Tinuvin® 1600, BASF, Ludwigshafen), Tetraethyl-2,2'-(1,4-phenylen-dimethyliden)-bismalonat (Hostavin® B-Cap, Clariant AG) oder N-(2-Ethoxyphenyl)-N'-(2-ethylphenyl)-ethandiamid (Tinuvin® 312, CAS-Nr. 23949-66-8, BASF, Ludwigshafen).

Besonders bevorzugte spezielle UV-Stabilisatoren sind Tinuvin® 360, Tinuvin® 329 und/oder Tinuvin® 312, ganz besonders bevorzugt sind Tinuvin® 329 und Tinuvin® 360.

Es können auch Mischungen dieser Ultraviolett-Absorber eingesetzt werden.

Bevorzugt enthält die Zusammensetzung Ultraviolett-Absorber in einer Menge bis 0,8 Gew.-%, bevorzugt 0,05 Gew.-% bis 0,5 Gew.-% , weiter bevorzugt 0,1 Gew.-% bis 0,4 Gew.-%, bezogen auf die Gesamtzusammensetzung.

Die erfindungsgemäßen Zusammensetzungen können auch Phosphate oder Sulfonsäureester als Umesterungsstabilisatoren enthalten. Bevorzugt ist Triisooctylphosphat als Umesterungsstabilisator enthalten.

Die Zusammensetzung kann frei von Entformungsmitteln, z.B. GMS sein. Die Isosorbiddiester selbst wirken als Entformungsmittel.

Besonders bevorzugt ist mindestens ein Thermostabilisator (Komponente C) und gegebenenfalls als weiteres Additiv (Komponente D) ein Umesterungsstabilisator, insbesondere Triisooctylphosphat (TOF), oder ein UV-Absorber enthalten.

Die Herstellung der erfindungsgemäßen Zusammensetzungen, enthaltend die Komponenten A bis D, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten B bis D verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten B bis D der erfindungsgemäßen Zusammensetzung durch bekannte Verfahren oder als Masterbatch in das Polycarbonat eingebracht werden.

Die Verwendung von Masterbatchen ist zum Einbringen der Komponenten B bis D, einzeln oder in Mischung, bevorzugt.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die erfindungsgemäßen Zusammensetzungen können auf üblichen Maschinen, beispielsweise auf Extrudern oder Spritzgussmaschinen, zu beliebigen Formkörpern, wie beispielsweise Folien, Platten oder Flaschen, in üblicher Weise verarbeitet werden.

Die Herstellung der Formteile erfolgt vorzugsweise durch Spritzguss, Extrusion oder aus Lösung in einem Gießprozess.

Die erfindungsgemäßen Zusammensetzungen sind zur Herstellung von Mehrschichtsystemen geeignet. Hierbei wird die Polycarbonatzusammensetzung in einer oder mehreren Schicht(en) auf einen geformten Gegenstand aus einem Kunststoff aufgebracht. Das Aufbringen kann zugleich mit oder unmittelbar nach der Formgebung des Formkörpers geschehen, zum Beispiel durch Hinterspritzen einer Folie, Coextrusion oder Mehrkomponentenspritzguss. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

Die erfindungsgemäßen Zusammensetzungen, sind zur Herstellung von Bauteilen im Automotive-Bereich, etwa für Blenden, Scheinwerferabdeckungen oder -rahmen, Linsen und Kollimatoren oder Lichtleiter sowie zur Herstellung von Rahmenbauteilen im EE (Elektro/Elektronik)- und IT-Bereich geeignet, insbesondere für Anwendungen, die hohe Anforderungen an die Fließfähigkeit stellen (Dünnschichtanwendungen). Solche Anwendungen sind beispielsweise Bildschirme oder Gehäuse, etwa für Ultrabooks oder Rahmen für LED-Display-Technologien, z.B. OLED-Displays oder LCD-Displays oder auch für E-Ink-Geräte. Weitere Anwendungsfelder sind Gehäuseteile von mobilen Kommunikationsendgeräten, wie Smartphones, Tablets, Ultrabooks, Notebooks oder Laptops, aber auch Navigationsgeräte, Smartwatches oder Herzfrequenzmesser, sowie Elektroanwendungen in Dünnwand-Ausfertigungen, z. B. Haus- und Industrie-Vernetzungseinheiten und Smart Meter Gehäusebauteile.

Die Formkörper und Extrudate aus den erfindungsgemäßen Zusammensetzungen sowie Formteile, Extrudate und Mehrschichtsysteme enthaltend die erfindungsgemäßen Zusammensetzungen sind ebenfalls Gegenstand dieser Anmeldung.

Die erfindungsgemäßen Zusammensetzungen zeichnen sich insbesondere dadurch aus, dass sie aufgrund ihres Gehalt an Isosorbitdiester über ausgezeichnete rheologische und optische Eigenschaften sowie reduzierte Gleit- und Haftreibungskoeffizienten verfügen. Ein weiterer Vorteil der erfindungsgemäßen Zusammensetzungen liegt darin, dass auf ein zusätzliches Entformungsmittel, beispielsweise PETS (Pentaerythrittetrastearat), verzichtet werden kann. Diese Additive setzen häufig die thermischen Eigenschaften herab. Daher umfasst die erfindungsgemäße Zusammensetzung bevorzugt kein Pentaerythrittetrastearat.Ein weiterer Gegenstand der vorliegenden Erfindung ist daher auch die Verwendung eines oder mehrerer der vorgehend beschriebenen Isosorbiddiester zur Verbesserung der optischen Transmission und/oder zur Senkung der Gleit- und Haftreibungskoeffizienten von Zusammensetzungen umfassend aromatisches Polycarbonat (Komponente A), gegebenenfalls Thermostabilisator (Komponente C) und gegebenenfalls weitere Additive (Komponente D).

Die für die erfindungsgemäßen Zusammensetzung vorstehend beschriebenen Ausführungsformen gelten - soweit anwendbar - auch für die erfindungsgemäße Verwendung.

Die nachfolgenden Beispiele sollen die Erfindung illustrieren, ohne sie jedoch einzuschränken.

### Beispiele

### 1. Beschreibung der Rohstoffe und Prüfmethoden

Die in den folgenden Beispielen beschriebenen Polycarbonatzusammensetzungen wurden auf einem Extruder ZE 25 der Fa. Berstorff mit einem Durchsatz von 10 kg/Std. durch Compoundierung hergestellt. Die Schmelzetemperatur betrug 275 °C.
Komponente A-1: Lineares Polycarbonat auf Basis von Bisphenol A mit einer Schmelze-Volumenfließrate MVR von 12,5 cm³/10 min (gemäß ISO 1133, bei einer Prüftemperatur 300°C und 1,2 kg Belastung), enthaltend Triphenylphosphin als Komponente C (Thermostabilisator), hergestellt durch Zugabe über einen Seitenextruder.
Komponente A-2: Lineares Polycarbonat auf Basis von Bisphenol A mit einer Schmelze-Volumenfließrate MVR von 9,5 cm³/10 min (gemäß ISO 1133, bei einer Prüftemperatur 300°C und 1,2 kg Belastung), enthaltend Triphenylphosphin als Komponente C (Thermostabilisator), hergestellt durch Zugabe über einen Seitenextruder.
Komponente A-3: Lineares Polycarbonat in Pulverform auf Basis von Bisphenol A mit einer Schmelze-Volumenfließrate MVR von 6 cm³/10 min (gemäß ISO 1133, bei einer Prüftemperatur von 300°C und 1,2 kg Belastung).
Komponente A-4: Lineares Polycarbonat auf Basis von Bisphenol A mit einer Schmelze-Volumenfließrate MVR von 32 cm³/10 min (gemäß ISO 1133, bei einer Prüftemperatur von 300°C und 1,2 kg Belastung), enthaltend Triphenylphosphin als Komponente C (Thermostabilisator), Tinuvin 329 als Komponente D-2 (UV-Stabilisator) und Glycerinmonostearat als Komponente D-3 (Entformungsmittel), hergestellt durch Zugabe über einen Seitenextruder.
Komponente A-5: Lineares Polycarbonat in Pulverform auf Basis von Bisphenol A mit einer Schmelze-Volumenfließrate MVR von 19 cm³/10 min (gemäß ISO 1133, bei einer Prüftemperatur von 300°C und 1,2 kg Belastung).
Komponente A-6: Copolycarbonat auf Basis von Bisphenol A und Bisphenol TMC mit einem MVR von 18 cm³/10 min (330°C/2,16 kg) und einer Erweichungstemperatur (VST/B 120) von 182°C von Covestro AG, enthaltend Triphenylphosphin als Komponente C (Thermostabilisator).
Komponente A-7: Verzweigtes Polycarbonat auf Basis von Bisphenol A mit einer Schmelze-Volumenfließrate MVR von 2 cm³/10 min (gemäß ISO 1133, bei einer Prüftemperatur 300°C und 1,2 kg Belastung),
Komponente B-1 Isosorbiddiester Polysorb ID37 der Firma Roquette Freres.
Komponente B-2 Isosorbiddiester Polysorb ID46 der Firma Roquette Freres.
Komponente C: Triphenylphosphin der Firma BASF
Komponente D-1: Triisooctylphosphat (TOF) der Firma Lanxess AG
Komponente D-2: Tinuvin 329 der Firma BASF
Komponente D-3: Glycerinmonostearat der Emery Oleochemicals, Loxstedt

Die Kerbschlagzähigkeit nach Charpy wurde nach ISO 7391/180A an einseitig angespritzten Prüfstäben der Dimension 80 x 10 x 3 mm bei Raumtemperatur gemessen.

Die Vicat-Erweichungstemperatur VST/B50 als Maß für die Wärmeformbeständigkeit wurde gemäß ISO 306 an Prüfkörpern der Abmessung 80 x 10 x 4 mm mit einer Stempellast von 50 N und einer Aufheizgeschwindigkeit von 50°C/h bzw. von 120 °C/h mit dem Gerät Coesfeld Eco 2920 der Firma Coesfeld Materialtest bestimmt.

Die Bestimmung des Schmelze-Volumenfließrate (MVR) erfolgte nach ISO 1133 (bei einer Prüftemperatur von 300 °C, Masse 1,2 kg bzw. 2,16 kg) mit dem Gerät Zwick 4106 der Firma Zwick Roell. Zusätzlich wurde der MVR nach 20 Minuten Vorwärmzeit gemessen. Dies ist ein Maß für die Schmelzestabilität unter erhöhtem thermischem Stress.

Der Yellowness Index (Y.I.) wurde gemäß ASTM E 313 (Beobachter: 10° / Lichtart: D65) an Musterplatten mit einer Schichtdicke von 4 mm bestimmt.

Die Transmission im VIS-Bereich des Spektrum (400 nm bis 800 nm) wurde nach ISO 13468 an Musterplatten mit einer Schichtdicke von 4 mm bzw. 12 mm bestimmt.

Die Trübung wurde bestimmt nach ASTM D1003 an Musterplatten mit einer Schichtdicke von 4 mm bzw. 12 mm.

Die Musterplatten wurden jeweils durch Spritzguß bei den in den nachfolgenden Tabellen angegebenen Massetemperaturen hergestellt.

Die Bestimmung der Lösungsviskosität eta rel erfolgte nach ISO1628 mit einem Ubbelohde-Viskosimeter.

Die Bestimmung der Scherviskosität (Schmelzeviskosität) erfolgte in Anlehnung an ISO 11443 mit dem Gerät Visco-Robo 45.00 der Fa. Göttfert.

### 2. Zusammensetzungen

**Tabelle1:**

| Rezeptur: | | 1 (Vgl.) | 2 | 3 | 4 | 5 | 6 |
|---|---|---|---|---|---|---|---|
| A-1¹⁾ | Gew.-% | 93 | 93 | 93 | 93 | 93 | 93 |
| A-3 | Gew.-% | 7 | 6,9 | 6,8 | 6,6 | 6,4 | 6,2 |
| B-1 | Gew.-% | - | 0,1 | 0,2 | 0,4 | 0,6 | 0,8 |
| | | | | | | | |

| Prüfungen | | | | | | | |
|---|---|---|---|---|---|---|---|
| MVR 7'/300 °C/1,2 Kg | ml/10min | 11,7 | 11,9 | 12,3 | 12,8 | 13,3 | 13,4 |
| MVR 20'/300 °C/1,2 Kg | ml/10min | 11,7 | 12 | 12,5 | 12,9 | 13,5 | 13,8 |
| Vicat VSTB 50 | °C | 145,5 | 144,8 | 143,9 | 142,9 | 141,14 | 140,5 |
| | | | | | | | |

| Schmelzevisk. bei 280°C | | | | | | | |
|---|---|---|---|---|---|---|---|
| eta 50 | Pa·s | 751 | 764 | 729 | 728 | 697 | 691 |
| eta 100 | Pa·s | 746 | 728 | 717 | 705 | 686 | 660 |
| eta 200 | Pa·s | 683 | 667 | 659 | 646 | 636 | 609 |
| eta 500 | Pa·s | 548 | 535 | 532 | 521 | 521 | 495 |
| eta 1000 | Pa·s | 415 | 407 | 404 | 397 | 397 | 380 |
| eta 1500 | Pa·s | 336 | 331 | 328 | 322 | 321 | 310 |
| eta 5000 | Pa·s | 153 | 151 | 150 | 148 | 147 | 144 |

| Schmelzevisk. bei 300°C | | | | | | | |
|---|---|---|---|---|---|---|---|
| eta 50 | Pa·s | 412 | 416 | 406 | 382 | 384 | 361 |
| eta 100 | Pa·s | 403 | 407 | 397 | 373 | 375 | 357 |
| eta 200 | Pa·s | 381 | 384 | 377 | 356 | 356 | 338 |
| eta 500 | Pa·s | 327 | 329 | 324 | 306 | 306 | 293 |
| eta 1000 | Pa·s | 270 | 271 | 267 | 248 | 253 | 246 |
| eta 1500 | Pa·s | 230 | 232 | 228 | 213 | 218 | 212 |
| eta 5000 | Pa·s | 119 | 118 | 117 | 113 | 115 | 113 |

| Schmelzevisk. bei 320°C | | | | | | | |
|---|---|---|---|---|---|---|---|
| eta 100 | Pa·s | 221 | 222 | 212 | 199 | 193 | 202 |
| eta 200 | Pa·s | 216 | 211 | 206 | 195 | 188 | 194 |
| eta 500 | Pa·s | 197 | 196 | 189 | 177 | 173 | 180 |
| eta 1000 | Pa·s | 173 | 173 | 167 | 156 | 152 | 159 |
| eta 1500 | Pa·s | 155 | 151 | 149 | 140 | 137 | 142 |
| eta 5000 | Pa·s | 93 | 85 | 83 | 85 | 84 | 85 |

| Kerbschlagzähigkeit ISO 7391/180A (3mm) | | | | | | | |
|---|---|---|---|---|---|---|---|
| 23°C | kJ/m² | 64z | 64z | 65z | 64z | 64z | 66z |
| 0°C | kJ/m² | - | - | - | - | 60z | 62z |
| -10°C | kJ/m² | 57z | 58z | 59z | 57z | 5x59z 5x18s | 3x61z 7x16s |
| -20°C | kJ/m² | 3x57z 7x20s | 7x55z 3x24s | 4x58z 6x19s | 2x61z 8x19s | 16s | 14s |
| -30°C | kJ/m² | 16s | 16s | 15s | 16s | - | - |
| Schlagzähigkeit ISO180/1C 4mm, 23°C | kJ/m² | n.g. | n.g. | n.g. | n.g. | n.g. | n.g. |

| Optik 4mm | | | | | | | |
|---|---|---|---|---|---|---|---|
| 290°C²⁾ | | | | | | | |
| Transmission | % | 88,88 | 88,97 | 89,18 | 89,18 | 89,22 | 89,19 |
| Trübung | % | 0,33 | 0,30 | 0,28 | 0,27 | 0,37 | 0,40 |
| Y.I. | | 2,30 | 2,46 | 2,35 | 2,40 | 2,24 | 2,38 |

| 300°C²⁾ | | | | | | | |
|---|---|---|---|---|---|---|---|
| Transmission | % | 88,91 | 88,98 | 89,18 | 89,11 | 89,23 | 89,22 |
| Trübung | % | 0,33 | 0,36 | 0,23 | 0,25 | 0,28 | 0,31 |
| Y.I. | | 2,28 | 2,44 | 2,32 | 2,41 | 2,23 | 2,34 |

| | | | | | | | |
|---|---|---|---|---|---|---|---|
| ¹⁾: enthält Triphenylphosphin als Komponente C; ²⁾: Massetemperatur im Spritzgussprozess bei der Herstellung der Prüfkörper; n.g.: nicht gebrochen (kein Wert, da kein Bruch). | | | | | | | |

Tabelle 1 zeigt, dass die erfindungsgemäßen Beispiele 2 bis 6 höhere MVR-Werte, niedrigere Schmelzviskositäten und gleichzeitig verbesserte optische Eigenschaften aufweisen als das Vergleichsbeispiel 1.

**Tabelle 2:**

| Rezeptur: | | 7 (Vgl.) | 8 | 9 | 10 | 11 |
|---|---|---|---|---|---|---|
| A-1¹⁾ | Gew.-% | 93 | 93 | 93 | 93 | 93 |
| A-3 | Gew.-% | 6,99 | 6,79 | 6,59 | 6,39 | 6,19 |
| B-1 | Gew.-% | - | 0,2 | 0,4 | 0,6 | 0,8 |
| D-1 | Gew.-% | 0,01 | 0,01 | 0,01 | 0,01 | 0,01 |
| | | | | | | |

| Prüfungen | | | | | | |
|---|---|---|---|---|---|---|
| eta rel Granulat | | 1,278 | 1,279 | 1,278 | 1,278 | 1,277 |
| MVR 7'/300 °C/1,2 Kg | ml/10min | 11,7 | 12,1 | 12,5 | 12,6 | 12,7 |
| Vicat VSTB 50 | °C | 145,1 | 143,9 | 143,3 | 142,6 | 142,1 |
| | | | | | | |

| Schmelzeviskosität | | | | | | |
|---|---|---|---|---|---|---|
| Schmelzevisk. bei 280°C | | | | | | |
| eta 50 | Pa·s | 598 | 747 | 719 | 711 | 741 |
| eta 100 | Pa·s | 588 | 712 | 687 | 677 | 717 |
| eta 200 | Pa·s | 546 | 658 | 637 | 621 | 659 |
| eta 500 | Pa·s | 471 | 528 | 516 | 502 | 531 |
| eta 1000 | Pa·s | 396 | 406 | 397 | 384 | 404 |
| eta 1500 | Pa·s | 328 | 330 | 325 | 312 | 328 |
| eta 5000 | Pa·s | 151 | 152 | 150 | 145 | 151 |

| Schmelzevisk. bei 300°C | | | | | | |
|---|---|---|---|---|---|---|
| eta 50 | Pa·s | 447 | 387 | 372 | 380 | 359 |
| eta 100 | Pa·s | 438 | 377 | 361 | 375 | 351 |
| eta 200 | Pa·s | 414 | 365 | 349 | 357 | 337 |
| eta 500 | Pa·s | 353 | 316 | 299 | 308 | 293 |
| eta 1000 | Pa·s | 289 | 262 | 246 | 256 | 246 |
| eta 1500 | Pa·s | 246 | 226 | 213 | 221 | 213 |
| eta 5000 | Pa·s | 125 | 118 | 112 | 116 | 114 |

| Schmelzevisk. bei 320°C | | | | | | |
|---|---|---|---|---|---|---|
| eta 50 | Pa·s | 209 | 197 | 207 | 199 | 192 |
| eta 100 | Pa·s | 207 | 194 | 204 | 196 | 190 |
| eta 200 | Pa·s | 205 | 191 | 199 | 189 | 186 |
| eta 500 | Pa·s | 186 | 177 | 181 | 174 | 172 |
| eta 1000 | Pa·s | 163 | 157 | 159 | 153 | 152 |
| eta 1500 | Pa·s | 148 | 143 | 143 | 139 | 137 |
| eta 5000 | Pa·s | 90 | 88 | 87 | 85 | 85 |

| Kerbschlagzähigkeit ISO 7391/180A (3mm) | | | | | | |
|---|---|---|---|---|---|---|
| 23°C | kJ/m² | 65z | 65z | 66z | 66z | 65z |
| -10°C | kJ/m² | 57z | 58z | 60z | 59z | 60z |
| -20°C | kJ/m² | 3x58z 7x19s | 2x56z 8x19s | 2x59z 8x19s | 2x36z 8x16s | 2x36z 8x18s |
| Schlagzähigkeit ISO180/1C, 4mm, 23°C | kJ/m² | n.g. | n.g. | n.g. | n.g. | n.g. |

| Optik 4mm | | | | | | |
|---|---|---|---|---|---|---|
| 290°C²⁾ | | | | | | |
| Transmission | % | 88,97 | 89,13 | 89,24 | 89,17 | 89,18 |
| Trübung | % | 0,57 | 0,32 | 0,22 | 0,28 | 0,26 |
| Y.I. | | 2,55 | 2,43 | 2,29 | 2,36 | 2,48 |

| 300°C²⁾ | | | | | | |
|---|---|---|---|---|---|---|
| Transmission | % | 89,12 | 89,17 | 89,28 | 89,18 | 89,19 |
| Trübung | % | 0,36 | 0,26 | 0,24 | 0,24 | 0,27 |
| Y.I. | | 2,38 | 2,39 | 2,22 | 2,36 | 2,49 |

| 300°C²⁾ 5x VWZ³⁾ | | | | | | |
|---|---|---|---|---|---|---|
| Transmission | % | 89,13 | 89,17 | 89,23 | 89,15 | 89,23 |
| Trübung | % | 0,45 | 0,33 | 0,32 | 0,30 | 0,33 |
| Y.I. | | 2,50 | 2,47 | 2,40 | 2,56 | 2,53 |

| 320°C²⁾ | | | | | | |
|---|---|---|---|---|---|---|
| Transmission | % | 89,12 | 89,25 | 89,18 | 88,96 | 89,31 |
| Trübung | % | 0,35 | 0,29 | 0,27 | 0,32 | 0,25 |
| Y.I. | | 2,54 | 2,25 | 2,47 | 2,71 | 2,30 |

| 320°C²⁾ 5x VWZ³⁾ | | | | | | |
|---|---|---|---|---|---|---|
| Transmission | % | 89,08 | 89,17 | 89,20 | 89,12 | 89,27 |
| Trübung | % | 0,42 | 0,34 | 0,34 | 0,35 | 0,40 |
| Y.I. | | 2,50 | 2,44 | 2,63 | 2,80 | 2,58 |

| | | | | | | |
|---|---|---|---|---|---|---|
| ¹⁾: enthält Triphenylphosphin als Komponente C; ²⁾: Massetemperatur im Spritzgussprozess bei der Herstellung der Prüfkörper, ³⁾: 5 x VWZ: 5-fache Verweilzeit der Schmelze in der Spritzgussmaschine bevor der Prüfkörper gespritzt wird; einfache Verweilzeit: 45 Sekunden; n.g.: nicht gebrochen (kein Wert, da kein Bruch). | | | | | | |

Tabelle 2 zeigt, dass die erfindungsgemäßen Beispiele 8 bis 11 höhere MVR-Werte, niedrigere Schmelzviskositäten und gleichzeitig verbesserte optische Eigenschaften aufweisen als das Vergleichsbeispiel 7.

**Tabelle 3:**

| Rezeptur: | | 12 (Vgl.) | 13 | 14 | 15 | 16 | 17 |
|---|---|---|---|---|---|---|---|
| A-2¹⁾ | Gew.-% | 93 | 93 | 93 | 93 | 93 | 93 |
| A-3 | Gew.-% | 7 | 6,9 | 6,8 | 6,6 | 6,4 | 6,2 |
| B-1 | Gew.-% | - | 0,1 | 0,2 | 0,4 | 0,6 | 0,8 |

| Prüfungen | | | | | | | |
|---|---|---|---|---|---|---|---|
| eta rel Granulat | | 1,290 | 1,289 | 1,289 | 1,288 | 1,287 | 1,287 |
| MVR 7'/300 °C/1,2 Kg | ml/10min | 8,7 | 9,0 | 9,2 | 9,6 | 10,0 | 10,1 |
| | | | | | | | |
| Vicat VSTB 50 | °C | 145,3 | 144,4 | 143,9 | 142,6 | 139,7 | 140,6 |
| | | | | | | | |

| Schmelzevisk. bei 280°C | | | | | | | |
|---|---|---|---|---|---|---|---|
| eta 50 | Pa·s | 999 | 1010 | 969 | 965 | 910 | 870 |
| eta 100 | Pa·s | 921 | 935 | 888 | 890 | 840 | 805 |
| eta 200 | Pa·s | 816 | 832 | 790 | 784 | 742 | 714 |
| eta 500 | Pa·s | 630 | 636 | 610 | 601 | 574 | 552 |
| eta 1000 | Pa·s | 461 | 464 | 448 | 441 | 425 | 411 |
| eta 1500 | Pa·s | 367 | 368 | 357 | 352 | 340 | 332 |
| eta 5000 | Pa·s | 164 | 164 | 159 | 158 | 154 | 151 |

| Schmelzevisk. bei 300°C | | | | | | | |
|---|---|---|---|---|---|---|---|
| eta 50 | Pa·s | 500 | 487 | 472 | 474 | 440 | 449 |
| eta 100 | Pa·s | 488 | 476 | 462 | 462 | 449 | 430 |
| eta 200 | Pa·s | 449 | 443 | 427 | 431 | 416 | 395 |
| eta 500 | Pa·s | 372 | 371 | 356 | 352 | 347 | 331 |
| eta 1000 | Pa·s | 299 | 298 | 287 | 285 | 280 | 269 |
| eta 1500 | Pa·s | 252 | 251 | 243 | 242 | 237 | 229 |
| eta 5000 | Pa·s | 125 | 126 | 123 | 122 | 120 | 110 |

| Schmelzevisk. bei 320°C | | | | | | | |
|---|---|---|---|---|---|---|---|
| eta 50 | Pa·s | 250 | 255 | 275 | 271 | 232 | 241 |
| eta 100 | Pa·s | 245 | 251 | 266 | 264 | 232 | 233 |
| eta 200 | Pa·s | 242 | 241 | 257 | 256 | 221 | 221 |
| eta 500 | Pa·s | 210 | 211 | 225 | 223 | 195 | 197 |
| eta 1000 | Pa·s | 179 | 179 | 192 | 190 | 168 | 170 |
| eta 1500 | Pa·s | 150 | 148 | 169 | 168 | 150 | 152 |
| eta 5000 | Pa·s | 85 | 84 | 97 | 96 | 88 | 88 |

| Kerbschlagzähigkeit ISO 7391/180A (3mm) | | | | | | | |
|---|---|---|---|---|---|---|---|
| 23°C | kJ/m² | 66z | 66z | 66z | 66z | 67z | 67z |
| 0°C | kJ/m² | - | - | - | - | - | 63z |
| -10°C | kJ/m² | - | - | - | - | - | 5x60z 5x17s |
| -20°C | kJ/m² | 61z | 62z | 60z | 63z | 38z | 15s |
| -30°C | kJ/m² | 1x54z 9x16s | 15s | 15s | 15s | 14s | - |

| Reibungskoeffizient | | | | | | | |
|---|---|---|---|---|---|---|---|
| Haftreibung | | 0,60 | 0,49 | 0,45 | 0,40 | 0,34 | 0,36 |
| Gleitreibung | | 0,56 | 0,49 | 0,45 | 0,41 | 0,36 | 0,37 |
| Schlagzähigkeit ISO180/1C 4mm, 23°C | kJ/m² | n.g. | n.g. | n.g. | n.g. | n.g. | n.g. |

| Optik 4mm | | | | | | | |
|---|---|---|---|---|---|---|---|
| 280°C²⁾ | | | | | | | |
| Transmission | % | 88,82 | 89,07 | 89,34 | 89,31 | 89,39 | 89,34 |
| Trübung | % | 0,29 | 0,31 | 0,50 | 0,34 | 0,28 | 0,32 |
| Y.I. | | 2,30 | 2,14 | 1,99 | 2,04 | 1,96 | 2,02 |

| 300°C²⁾ | | | | | | | |
|---|---|---|---|---|---|---|---|
| Transmission | % | 88,81 | 89,05 | 89,28 | 89,29 | 89,42 | 89,40 |
| Trübung | % | 0,30 | 0,27 | 0,49 | 0,22 | 0,29 | 0,29 |
| Y.I. | | 2,43 | 2,17 | 2,11 | 2,07 | 2,04 | 1,96 |

| 300°C²⁾ 5x VWZ³⁾ | | | | | | | |
|---|---|---|---|---|---|---|---|
| Transmission | % | 88,69 | 88,99 | 89,09 | 89,28 | 89,37 | 89,33 |
| Trübung | % | 0,33 | 0,32 | 0,45 | 0,34 | 0,36 | 0,37 |
| Y.I. | | 2,47 | 2,35 | 2,21 | 2,23 | 2,28 | 2,27 |

| 320°C²⁾ | | | | | | | |
|---|---|---|---|---|---|---|---|
| Transmission | % | 88,76 | 89,08 | 89,36 | 89,23 | 89,38 | 89,38 |
| Trübung | % | 0,29 | 0,30 | 0,29 | 0,65 | 0,28 | 0,29 |
| Y.I. | | 2,39 | 2,18 | 2,04 | 2,42 | 2,23 | 2,15 |

| 320°C²⁾ 5x VWZ³⁾ | | | | | | | |
|---|---|---|---|---|---|---|---|
| Transmission | % | 88,67 | 89,04 | 89,32 | 88,89 | 89,39 | 89,38 |
| Trübung | % | 0,53 | 0,29 | 0,37 | 0,31 | 0,35 | 0,41 |
| Y.I. | | 2,45 | 2,40 | 2,18 | 2,61 | 2,51 | 2,46 |

| | | | | | | | |
|---|---|---|---|---|---|---|---|
| ¹⁾: enthält Triphenylphosphin als Komponente C; ²⁾: Massetemperatur im Spritzgussprozess bei der Herstellung der Prüfkörper; ³⁾: 5 x VWZ: 5-fache Verweilzeit der Schmelze in der Spritzgussmaschine bevor der Prüfkörper gespritzt wird; einfache Verweilzeit: 45 Sekunden; n.g.: nicht gebrochen (kein Wert, da kein Bruch). | | | | | | | |

Tabelle 3 zeigt, dass die erfindungsgemäßen Beispiele 13 bis 17 höhere MVR-Werte, niedrigere Schmelzviskositäten und gleichzeitig verbesserte optische Eigenschaften aufweisen als das Vergleichsbeispiel 12. Gleichzeitig weisen die Beispiele 13 bis 17 reduzierte Haft- und Gleitreibungskoeffizienten als das Vergleichsbeispiel 12 auf.

**Tabelle 4:**

| Rezeptur: | | 18 (Vgl.) | 19 | 20 | 21 | 22 |
|---|---|---|---|---|---|---|
| A-2¹⁾ | Gew.-% | 93 | 93 | 93 | 93 | 93 |
| A-3 | Gew.-% | 6,99 | 6,79 | 6,59 | 6,39 | 6,19 |
| B-1 | Gew.-% | - | 0,2 | 0,4 | 0,6 | 0,8 |
| D-1 | Gew.-% | 0,01 | 0,01 | 0,01 | 0,01 | 0,01 |
| | | | | | | |

| Prüfungen | | | | | | |
|---|---|---|---|---|---|---|
| eta rel Granulat | | 1,289 | 1,289 | 1,288 | 1,287 | 1,286 |
| MVR 7'/300 °C/1,2 Kg | ml/10min | 9,2 | 9,3 | 9,5 | 9,9 | 10,3 |
| | | | | | | |
| Vicat VSTB 50 | °C | 145,4 | 143,4 | 142,6 | 140,7 | 139,6 |

| | | | | | | |
|---|---|---|---|---|---|---|
| Schmelzevisk. bei 280°C | | | | | | |
| eta 50 | Pa·s | 888 | 874 | 718 | 757 | 721 |
| eta 100 | Pa·s | 832 | 826 | 676 | 713 | 685 |
| eta 200 | Pa·s | 748 | 731 | 641 | 647 | 631 |
| eta 500 | Pa·s | 594 | 567 | 570 | 518 | 510 |
| eta 1000 | Pa·s | 447 | 404 | 421 | 397 | 394 |
| eta 1500 | Pa·s | 360 | 294 | 369 | 324 | 322 |
| eta 5000 | Pa·s | 163 | 145 | 159 | 150 | 149 |

| Schmelzevisk. bei 300°C | | | | | | |
|---|---|---|---|---|---|---|
| eta 50 | Pa·s | 441 | 405 | 413 | 395 | 381 |
| eta 100 | Pa·s | 429 | 393 | 397 | 378 | 369 |
| eta 200 | Pa·s | 402 | 373 | 378 | 355 | 345 |
| eta 500 | Pa·s | 344 | 321 | 325 | 306 | 298 |
| eta 1000 | Pa·s | 283 | 267 | 270 | 255 | 250 |
| eta 1500 | Pa·s | 242 | 230 | 232 | 220 | 217 |
| eta 5000 | Pa·s | 120 | 110 | 120 | 116 | 116 |

| Schmelzevisk. bei 320°C | | | | | | |
|---|---|---|---|---|---|---|
| eta 50 | Pa·s | 230 | 236 | 235 | 214 | 222 |
| eta 100 | Pa·s | 228 | 231 | 230 | 207 | 220 |
| eta 200 | Pa·s | 227 | 227 | 223 | 205 | 213 |
| eta 500 | Pa·s | 203 | 204 | 200 | 187 | 192 |
| eta 1000 | Pa·s | 175 | 177 | 173 | 163 | 168 |
| eta 1500 | Pa·s | 157 | 159 | 156 | 147 | 150 |
| eta 5000 | Pa·s | 92 | 94 | 93 | 85 | 90 |

| Kerbschlagzähigkeit ISO 7391/180A (3mm) | | | | | | |
|---|---|---|---|---|---|---|
| 23°C | kJ/m² | 65z | 67z | 67z | 66z | 67z |
| 0°C | kJ/m² | - | - | 64z | 62z | 61z |
| -10°C | kJ/m² | 62z | 60z | 7x58z 3x21s | 6x60z 4x17s | 2x60z 8x17s |
| -20°C | kJ/m² | 6x59z 4x19s | 2x54z 8x18s | 17s | 15s | 14s |
| -30°C | kJ/m² | 16s | 15s | - | - | - |
| Schlagzähigkeit ISO180/1C | kJ/m² | n.g. | n.g. | n.g. | n.g. | n.g. |

| Reibungsverhalten | | | | | | |
|---|---|---|---|---|---|---|
| Haftreibung | | 0,52 | 0,39 | 0,35 | 0,33 | 0,32 |
| Gleitreibung | | 0,5 | 0,4 | 0,36 | 0,34 | 0,33 |

| Optik 4mm | | | | | | |
|---|---|---|---|---|---|---|
| 280°C²⁾ | | | | | | |
| Transmission | % | 89,38 | 89,42 | 89,44 | 89,40 | 89,49 |
| Trübung | % | 0,30 | 0,28 | 0,27 | 0,37 | 0,34 |
| Y.I. | | 2,12 | 1,93 | 1,93 | 1,96 | 1,93 |

| 300°C²⁾ | | | | | | |
|---|---|---|---|---|---|---|
| Transmission | % | 89,18 | 89,39 | 89,37 | 89,54 | 89,44 |
| Trübung | % | 0,38 | 0,32 | 0,34 | 0,30 | 0,39 |
| Y.I. | | 2,56 | 2,10 | 1,96 | 1,91 | 2,05 |

| 300°C²⁾ 5x VWZ³⁾ | | | | | | |
|---|---|---|---|---|---|---|
| Transmission | % | 89,32 | 89,30 | 89,42 | 89,41 | 89,30 |
| Trübung | % | 0,35 | 0,38 | 0,29 | 0,30 | 0,35 |
| Y.I. | | 2,19 | 2,17 | 2,16 | 2,25 | 2,37 |

| 320°C²⁾ | | | | | | |
|---|---|---|---|---|---|---|
| Transmission | % | 89,25 | 89,36 | 89,42 | 89,41 | 89,52 |
| Trübung | % | 0,45 | 0,29 | 0,34 | 0,36 | 0,44 |
| Y.I. | | 2,29 | 2,13 | 1,84 | 2,34 | 1,95 |

| 320°C²⁾ 5x VWZ³⁾ | | | | | | |
|---|---|---|---|---|---|---|
| Transmission | % | 88,74 | 89,37 | 89,39 | 89,38 | 89,35 |
| Trübung | % | 1,51 | 0,40 | 0,37 | 0,38 | 0,40 |
| Y.I. | | 2,14 | 2,26 | 2,15 | 2,27 | 2,61 |

| | | | | | | |
|---|---|---|---|---|---|---|
| ¹⁾: enthält Triphenylphosphin als Komponente C; ²⁾: Massetemperatur im Spritzgussprozess bei der Herstellung der Prüfkörper; ³⁾: 5 x VWZ: 5-fache Verweilzeit der Schmelze in der Spritzgussmaschine bevor der Prüfkörper gespritzt wird; einfache Verweilzeit: 45 Sekunden; n.g.: nicht gebrochen (kein Wert, da kein Bruch). | | | | | | |

Tabelle 4 zeigt, dass die erfindungsgemäßen Beispiele 19 bis 22 höhere MVR-Werte, niedrigere Schmelzviskositäten und gleichzeitig verbesserte optische Eigenschaften aufweisen als das Vergleichsbeispiel 18. Gleichzeitig weisen die Beispiele 19 bis 22 reduzierte Haft- und Gleitreibungskoeffizienten als das Vergleichsbeispiel 18 auf.

**Tabelle 5:**

| Rezeptur | | 23 (Vgl.) | 24 | 25 | 26 |
|---|---|---|---|---|---|
| A-4¹⁾ | Gew.-% | 93,00 | 93,00 | 93,00 | 93,00 |
| A-5 | Gew.-% | 7,00 | 6,79 | 6,59 | 6,39 |
| B-2 | Gew.-% | - | 0,20 | 0,40 | 0,60 |
| D-1 | Gew.-% | - | 0,01 | 0,01 | 0,01 |
| | | | | | |

| Prüfungen: | | | | | |
|---|---|---|---|---|---|
| eta rel Granulat | | 1,231 | 1,231 | 1,229 | 1,230 |
| MVR 300°C/1,2kg | ml/10min | 31,2 | 32,9 | 33,3 | 35,0 |
| Vicat VSTB50 | °C | 143,9 | 142,3 | 140,6 | 139,1 |
| | | | | | |

| Schmelzevisk. bei 260°C | | | | | |
|---|---|---|---|---|---|
| eta 50 | Pa·s | 612 | 570 | 565 | 533 |
| eta 100 | Pa·s | 593 | 564 | 556 | 525 |
| eta 200 | Pa·s | 573 | 551 | 539 | 515 |
| eta 500 | Pa·s | 491 | 475 | 466 | 442 |
| eta 1000 | Pa·s | 387 | 378 | 370 | 355 |
| eta 1500 | Pa·s | 317 | 310 | 304 | 295 |
| eta 5000 | Pa·s | 147 | 144 | 142 | 139 |

| Schmelzevisk. bei 280°C | | | | | |
|---|---|---|---|---|---|
| eta 50 | Pa·s | 240 | 223 | 251 | 241 |
| eta 100 | Pa·s | 236 | 217 | 249 | 240 |
| eta 200 | Pa·s | 228 | 205 | 247 | 239 |
| eta 500 | Pa·s | 222 | 191 | 234 | 230 |
| eta 1000 | Pa·s | 180 | 166 | 207 | 202 |
| eta 1500 | Pa·s | 162 | 148 | 184 | 179 |
| eta 5000 | Pa·s | 100 | 93 | 104 | 101 |

| Schmelzevisk. bei 300°C | | | | | |
|---|---|---|---|---|---|
| eta 50 | Pa·s | 144 | 132 | 135 | 130 |
| eta 100 | Pa·s | 142 | 129 | 132 | 128 |
| eta 200 | Pa·s | 139 | 124 | 129 | 125 |
| eta 500 | Pa·s | 133 | 120 | 126 | 122 |
| eta 1000 | Pa·s | 117 | 113 | 115 | 116 |
| eta 1500 | Pa·s | 106 | 97 | 105 | 103 |
| eta 5000 | Pa·s | 74 | 71 | 66 | 71 |

| Optische Daten 4mm | | | | | |
|---|---|---|---|---|---|
| 280°C²⁾ | | | | | |
| Transmission | % | 87,61 | 88,34 | 88,78 | 88,81 |
| Trübung | % | 1,79 | 0,84 | 0,51 | 0,41 |
| Y.I. | | 1,06 | 0,73 | 0,60 | 0,62 |

| Optische Daten 12mm | | | | | |
|---|---|---|---|---|---|
| 280°C²⁾ | | | | | |
| Transmission | % | 82,49 | 85,34 | 86,08 | 86,19 |
| Trübung | % | 6,53 | 2,85 | 1,85 | 1,74 |
| Y.I. | | 2,40 | 1,30 | 1,03 | 1,00 |

| | | | | | |
|---|---|---|---|---|---|
| ¹⁾: enthält Triphenylphosphin als Komponente C sowie Tinuvin 329 als Komponente D-2 und Glycerinmonostearat als Komponente D-3; ²⁾: Massetemperatur im Spritzgussprozess bei der Herstellung der Prüfkörper. | | | | | |

Tabelle 5 zeigt, dass die erfindungsgemäßen Beispiele 24 bis 26 höhere MVR-Werte, niedrigere Schmelzviskositäten und gleichzeitig verbesserte optische Eigenschaften aufweisen als das Vergleichsbeispiel 23.

**Tabelle 6:**

| Rezeptur | | 27 (Vgl.) | 28 | 29 | 30 |
|---|---|---|---|---|---|
| A-6¹⁾ | Gew.-% | 93,00 | 93,00 | 93,00 | 93,00 |
| A-3 | Gew.-% | 7,00 | 6,79 | 6,59 | 6,39 |
| B-2 | Gew.-% | - | 0,20 | 0,40 | 0,60 |
| D-1 | Gew.-% | - | 0,01 | 0,01 | 0,01 |
| | | | | | |

| Prüfungen: | | | | | |
|---|---|---|---|---|---|
| eta rel Granulat | | 1,292 | 1,290 | 1,289 | 1,288 |
| MVR 330°C/2,16kg | ml/10min | 9,6 | 10,3 | 10,8 | 11,0 |
| IMVR20' 330°C/2,16kg | ml/10min | 9,8 | 10,8 | 12,0 | 11,6 |
| Delta MVR/IMVR20' | | 0,2 | 0,5 | 1,2 | 0,6 |
| | | | | | |

| Schmelzevisk. bei 300°C | | | | | |
|---|---|---|---|---|---|
| eta 50 | Pa·s | 2161 | 1953 | 1908 | 1792 |
| eta 100 | Pa·s | 1948 | 1778 | 1736 | 1643 |
| eta 200 | Pa·s | 1653 | 1516 | 1478 | 1408 |
| eta 500 | Pa·s | 1104 | 1025 | 1001 | 963 |
| eta 1000 | Pas | 746 | 696 | 675 | 652 |
| eta 1500 | Pa·s | 572 | 536 | 523 | 505 |
| eta 5000 | Pas | 250 | 234 | 234 | 225 |

| Schmelzevisk. bei 320°C | | | | | |
|---|---|---|---|---|---|
| eta 50 | Pa·s | 1140 | 972 | 934 | 890 |
| eta 100 | Pa·s | 1068 | 911 | 878 | 849 |
| eta 200 | Pa·s | 960 | 818 | 787 | 768 |
| eta 500 | Pa·s | 712 | 632 | 608 | 601 |
| eta 1000 | Pas | 501 | 459 | 441 | 439 |
| eta 1500 | Pa·s | 392 | 364 | 350 | 349 |
| eta 5000 | Pa·s | 172 | 164 | 159 | 157 |

| Schmelzevisk. bei 330°C | | | | | |
|---|---|---|---|---|---|
| eta 50 | Pa·s | 813 | 646 | 646 | 603 |
| eta 100 | Pa·s | 741 | 624 | 610 | 559 |
| eta 200 | Pa·s | 687 | 582 | 563 | 523 |
| eta 500 | Pa·s | 552 | 477 | 461 | 433 |
| eta 1000 | Pa·s | 411 | 366 | 356 | 338 |
| eta 1500 | Pa·s | 330 | 299 | 291 | 278 |
| eta 5000 | Pa·s | 152 | 141 | 138 | 133 |

| Schmelzevisk. bei 340°C | | | | | |
|---|---|---|---|---|---|
| eta 50 | Pa·s | 589 | 433 | 416 | 403 |
| eta 100 | Pa·s | 560 | 425 | 407 | 398 |
| eta 200 | Pa·s | 530 | 406 | 391 | 380 |
| eta 500 | Pa·s | 444 | 350 | 337 | 333 |
| eta 1000 | Pa·s | 347 | 284 | 274 | 273 |
| eta 1500 | Pa·s | 285 | 240 | 232 | 232 |
| eta 5000 | Pa·s | 135 | 119 | 117 | 117 |

| Schmelzevisk. bei 360°C | | | | | |
|---|---|---|---|---|---|
| eta 50 | Pa·s | 286 | 214 | 196 | 196 |
| eta 100 | Pa·s | 285 | 219 | 204 | 201 |
| eta 200 | Pa·s | 283 | 219 | 202 | 199 |
| eta 500 | Pa·s | 258 | 204 | 188 | 186 |
| eta 1000 | Pa·s | 220 | 179 | 166 | 165 |
| eta 1500 | Pa·s | 192 | 160 | 149 | 150 |
| eta 5000 | Pa·s | 103 | 91 | 87 | 87 |
| | | | | | |
| Vicat VSTB 120 | °C | 181,8 | 180,1 | 178,9 | 176,1 |
| | | | | | |

| Optische Daten | | | | | |
|---|---|---|---|---|---|
| 330°C²⁾ | | | | | |
| Transmission | % | 88,38 | 88,87 | 88,59 | 88,74 |
| Y.I. | | 5,16 | 4,43 | 5,50 | 4,87 |
| Haze | % | 0,64 | 0,56 | 0,56 | 0,51 |

| 360°C²⁾ | | | | | |
|---|---|---|---|---|---|
| Transmission | % | 88,49 | 88,77 | 88,69 | 88,80 |
| Y.I. | | 4,67 | 4,60 | 4,96 | 4,87 |
| Haze | % | 0,56 | 0,58 | 0,55 | 0,53 |

| | | | | | |
|---|---|---|---|---|---|
| ¹⁾: enthält Triphenylphosphin als Komponente C; ²⁾: Massetemperatur im Spritzgussprozess bei der Herstellung der Prüfkörper. | | | | | |

Die Ergebnisse zeigen, dass die erfindungsgemäßen Copolycarbonat-Zusammensetzungen der Beispiele 28-30 über eine sehr gute Schmelzestabilität verfügen (MVR bzw. IMVR).

Durch Zugabe des Isosorbiddiesters wird die Fließfähigkeit im Vergleich zum Vergleichsbeispiel 27 deutlich verbessert. Dies gilt für verschiedene Temperaturen und für den gesamten Scherbereich (Schmelzeviskositäten).

Gleichzeitig werden die optischen Eigenschaften verbessert, was sich in einer höheren optischen Transmission im Vergleich zu Vergleichsbeispiel 27 zeigt.

**Tabelle 7:**

| | | 31 (Vgl.) | 32 | 33 (Vgl.) |
|---|---|---|---|---|
| A-6¹⁾ | Gew.% | 100 | 95 | 90 |
| Polysorb ID 46 | Gew.% | | 5 | 10 |
| | | | | |

| Ergebnisse | | | | |
|---|---|---|---|---|
| eta rel Granulat | | 1,253 | 1,239 | 1,225 |
| eta rel Probekörper | | 1,251 | 1,238 | 1,224 |
| MVR 330°C/2,16kg | cm³/10min | 15,4 | 40,3 | 107,3 |
| | | | | |
| Vicat VSTB 50 | °C | 182,5 | 143,3 | 116,9 |
| Vicat VSTB 120 | °C | 183,7 | 145,1 | 119,3 |
| | | | | |

| optische Eigenschaften 4mm, 330°C²⁾ | | | | |
|---|---|---|---|---|
| Transmission | | 88,69 | 89,10 | 87,74 |

| | | | | |
|---|---|---|---|---|
| ¹⁾: enthält Triphenylphosphin als Komponente C; ²⁾: Massetemperatur im Spritzgussprozess bei der Herstellung der Prüfkörper. | | | | |

Die Ergebnisse in Tabelle 7 zeigen, dass sich mit 5 Gew.-% Isosorbiddiester die optische Transmission erhöhen lässt, höhere Mengen haben jedoch einen negativen Einfluss auf die Transmission. Man erkennt ferner, dass bei hohen Mengen an Isosorbiddiester die Wärmeformbeständigkeit nimmt stark abnimmt.

**Tabelle 8**

| **Rezeptur** | | **34 (Vergl.)** | **35** | **36** | **37** |
|---|---|---|---|---|---|
| A-7 | % | 93,00 | 93,00 | 93,00 | 93,00 |
| A-3 | % | 6,99 | 6,79 | 6,59 | 6,39 |
| B-1 | % | - | 0,20 | 0,40 | 0,60 |
| D-1 | % | 0,01 | 0,01 | 0,01 | 0,01 |

| **Prüfungen:** | | **-1** | **-2** | **-3** | **-4** |
|---|---|---|---|---|---|
| MVR 300°C/1,2kg | ml/10min | 2,5 | 2,5 | 2,5 | 2,6 |
| IMVR20' 300°C/1,2kg | ml/10min | 2,6 | 2,5 | 2,6 | 2,6 |
| **Delta MVR/IMVR20'** | | **0,1** | **0,0** | **0,1** | **0,0** |
| Vicat VSTB50 | °C | 149,2 | 147,4 | 146,5 | 145,6 |

| **Schmelzevisk. @ 300°C** | | | | | |
|---|---|---|---|---|---|
| eta 50 | Pas | 2656 | 2556 | 2566 | 2598 |
| eta 100 | Pas | 1230 | 1177 | 1186 | 1105 |
| eta 200 | Pas | 976 | 989 | 1003 | 932 |
| eta 500 | Pas | 574 | 577 | 584 | 545 |
| eta 1000 | Pas | 421 | 421 | 426 | 399 |
| eta 1500 | Pas | 340 | 340 | 345 | 323 |
| eta 5000 | Pas | 159 | 180 | 161 | 151 |

| **Schmelzevisk. @ 320°C** | | | | | |
|---|---|---|---|---|---|
| eta 50 | Pas | 1184 | 1175 | 897 | 865 |
| eta 100 | Pas | 794 | 794 | 708 | 692 |
| eta 200 | Pas | 645 | 681 | 649 | 640 |
| eta 500 | Pas | 403 | 411 | 401 | 397 |
| eta 1000 | Pas | 309 | 315 | 304 | 303 |
| eta 1500 | Pas | 257 | 263 | 251 | 252 |
| eta 5000 | Pas | 128 | 131 | 126 | 126 |

| **Optische Daten 12mm** | | | | | |
|---|---|---|---|---|---|
| Transmission | % | 75,85 | 77,34 | 77,06 | 77,03 |
| YI | | 12,05 | 9,76 | 10,93 | 11,96 |
| Haze | % | 3,11 | 1,79 | 2,43 | 1,92 |

Die Ergebnisse der Tabelle 8 zeigen, dass die erfindungsgemäßen Polycarbonat-Zusammensetzungen der Beispiele 35-37 über eine sehr gute Schmelzestabilität verfügen (MVR bzw. IMVR).

Die optischen Eigenschaften werden deutlich verbessert, was sich in einer höheren optischen Transmission und einem niedrigeren Yellowness Index YI im Vergleich zu Vergleichsbeispiel 34 zeigt.

Durch Zugabe des Isosorbiddiesters wird die Fließfähigkeit im Vergleich zum Vergleichsbeispiel 34 deutlich verbessert. Dies gilt für verschiedene Temperaturen und für geringe Scherraten, was für die Extrusion besonders wichtig ist.

## Patentansprüche

1. Zusammensetzung enthaltend
A) 20,0 Gew.-% bis 99,95 Gew.-% aromatisches Polycarbonat und
B) 0,05 Gew.-% bis 20,0 Gew.-% Isosorbiddiester
mit der Maßgabe, dass, wenn es sich bei dem aromatischen Polycarbonat der Komponente A) um ein oder mehrere Copolycarbonate enthaltend mindestens die Monomereinheiten der Formel (1), 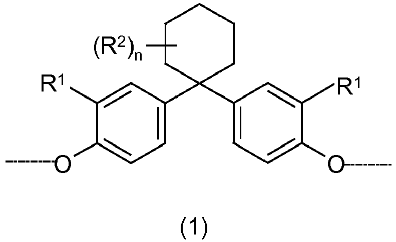 worin
R¹ für Wasserstoff oder C₁-C₄-Alkyl steht,
R² für C₁-C₄-Alkyl steht, und
n für 0, 1, 2 oder 3 steht,
handelt, die Zusammensetzung 0,05 bis 7,5 Gew.-% der Komponente B) umfasst.

2. Zusammensetzung nach Anspruch 1, **dadurch gekennzeichnet, dass** die Zusammensetzung als Komponente B) einen oder mehrere Isosorbiddiester aufweist, die sich von einer oder mehreren, gesättigten oder ungesättigten Monocarbonsäuren mit einer Kettenlänge von 4 bis 30 C-Atomen ableiten.

3. Zusammensetzung nach Anspruch 1 oder 2, **dadurch gekennzeichnet, dass** die Zusammensetzung als Komponente B) einen oder mehrere Isosorbiddiester der allgemeinen Formel (I) aufweist, 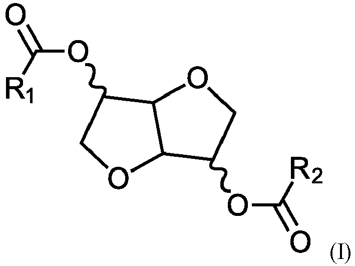 wobei R₁ und R₂ jeweils unabhängig voneinander für einen gesättigten, verzweigten oder unverzweigten aliphatischen Rest der Formel CₙH₂ₙ₊₁ oder für einen ein- oder mehrfach ungesättigten, verzweigten oder unverzweigten, aliphatischen Rest der Formel CₙH₂ₙ₋ₘ stehen, wobei n für eine Zahl von 3 bis 29 steht und m für 1, 3, 5, 7, 9 oder 11 steht.

4. Zusammensetzung nach einem der vorhergehenden Ansprüche, **dadurch gekennzeichnet, dass** sich der Isosorbiddiester von mindestens einer Carbonsäure ausgewählt aus der Gruppe bestehend aus Caprylsäure, Caprinsäure, Laurinsäure, Myristinsäure, Palmitinsäure, Margarinsäure, Stearinsäure, Arachinsäure, Behensäure, Lignocerinsäure, Palmitoleinsäure, Petroselinsäure, Ölsäure, Elaidinsäure, Linolsäure, Linolensäure, Arachidonsäure, Timnodonsäure und Cervonsäure ableitet.

5. Zusammensetzung nach einem der vorhergehenden Ansprüche, **dadurch gekennzeichnet, dass** die Menge an Isosorbiddiester 0,05 bis 15,00 Gew.-% beträgt mit der Maßgabe, dass, wenn es sich bei dem aromatischen Polycarbonat der Komponente A) um ein oder mehrere Copolycarbonate enthaltend mindestens die Monomereinheiten der Formel (1), 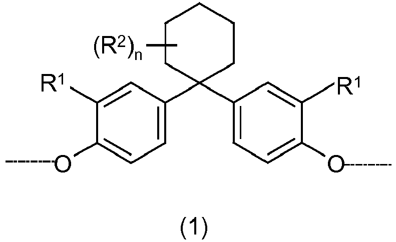 worin
R¹ für Wasserstoff oder C₁-C₄-Alkyl steht,
R² für C₁-C₄-Alkyl steht, und
n für 0, 1, 2 oder 3 steht,
handelt, die Zusammensetzung 0,05 bis 7,5 Gew.-% der Komponente B) umfasst.

6. Zusammensetzung nach einem der vorhergehenden Ansprüche, **dadurch gekennzeichnet, dass** die Menge an aromatischem Polycarbonat mindestens 50 Gew.-% beträgt.

7. Zusammensetzung nach einem der vorhergehenden Ansprüche, bestehend aus den folgenden Komponenten:
A) 82,0 Gew.-% bis 99,95 Gew.-% aromatischem Polycarbonat,
B) 0,05 Gew.-% bis 15,0 Gew.-% Isosorbiddiester,
C) 0,0 Gew.% bis 1,0 Gew.-% Thermostabilisator und
D) 0,0 Gew.% bis 2,0 Gew.-% eines oder mehrerer weiterer Additive aus der Gruppe der Antioxidantien, Entformungsmittel, Flammschutzmittel, UV-Absorber, IR-Absorber, Antistatika, optischen Aufheller, Farbmittel aus der Gruppe der löslichen organischen Pigmente und Additive zur Lasermarkierung
mit der Maßgabe, dass, wenn es sich bei dem aromatischen Polycarbonat der Komponente A) um ein oder mehrere Copolycarbonate enthaltend mindestens die Monomereinheiten der Formel (1), 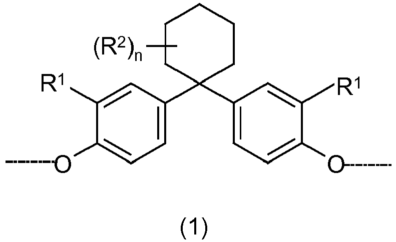 worin
R¹ für Wasserstoff oder C₁-C₄-Alkyl steht,
R² für C₁-C₄-Alkyl steht, und
n für 0, 1, 2 oder 3 steht,
handelt, die Zusammensetzung 0,05 bis 7,5 Gew.-% der Komponente B) umfasst.

8. Zusammensetzung gemäß einem der vorhergehenden Ansprüche, **dadurch gekennzeichnet, dass** die Zusammensetzung ferner einen Thermostabilisator enthält.

9. Zusammensetzung nach einem der vorhergehenden Ansprüche, **dadurch gekennzeichnet, dass** sie im Bereich von 400 nm bis 800 nm eine Transmission von mindestens 84%, bestimmt nach ISO 13468 bei einer Dicke von 4 mm, und eine Trübung < 5%, bestimmt nach ASTM D1003 bei einer Schichtdicke von 4 mm, aufweist.

10. Zusammensetzung gemäß einem der vorhergehenden Ansprüche, **dadurch gekennzeichnet, dass** die Zusammensetzung als Komponente A ein oder mehrere Copolycarbonate enthaltend die Monomereinheiten der Formel (1), 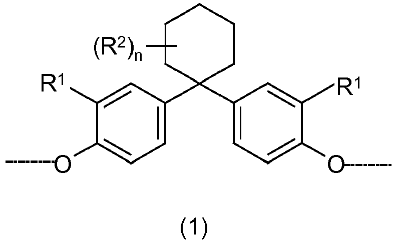 worin
R¹ für Wasserstoff oder C₁-C₄-Alkyl steht,
R² für C₁-C₄-Alkyl steht, und
n für 0, 1, 2 oder 3 steht,
optional in Kombination mit einem weiteren aromatischen Homo- oder Copolycarbonat, enthaltend eine oder mehrere Monomereinheiten der allgemeinen Formel (2), 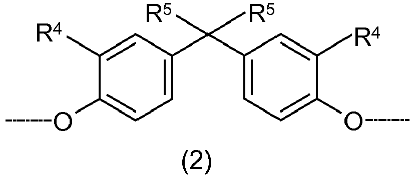 worin
R⁴ für H oder lineares oder verzweigtes C₁-C₁₀Alkyl steht, und
R⁵ für lineares oder verzweigtes C₁-C₁₀Alkyl steht;
enthält, wobei das gegebenenfalls zusätzlich vorhandene weitere Homo- oder Copolycarbonat keine Monomereinheiten der Formel (1) aufweist.

11. Zusammensetzung gemäß Anspruch 10, **dadurch gekennzeichnet, dass** der Anteil der Monomereinheiten der Formel (1a) im Copolycarbonat 0,1 - 88 mol-% (bezogen auf die Summe der im Copolycarbonat enthaltenen Diphenol-Monomereinheiten) beträgt.

12. Zusammensetzung gemäß Anspruch 10 oder 11, **dadurch gekennzeichnet, dass** das Copolycarbonat enthaltend die Monomereinheiten der Formel (1) zusätzlich Monomereinheiten der Formel (3) enthält 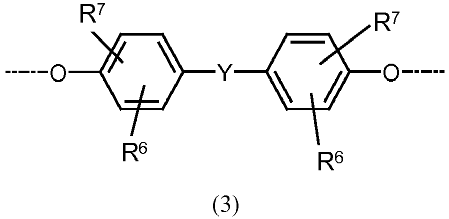 in welcher
R⁶ und R⁷ unabhängig voneinander für H, C₁-C₁₈-Alkyl-, C₁-C₁₈-Alkoxy, Halogen oder für jeweils gegebenenfalls substituiertes Aryl oder Aralkyl stehen, und
Y für eine Einfachbindung, -SO₂-, -CO-, -O-, -S-, C₁-C₆-Alkylen oder C₂-C₅-Alkyliden, ferner für C₆-C₁₂-Arylen, welches gegebenenfalls mit weiteren Heteroatome enthaltenden aromatischen Ringen kondensiert sein kann, steht.

13. Zusammensetzung gemäß einem der Ansprüche 9 bis 11, **dadurch gekennzeichnet, dass** die Zusammensetzung als Komponente A einen Blend aus dem Copolycarbonat enthaltend die Monomereinheiten der Formel (1) und Bisphenol A Homopolycarbonat enthält.

14. Formteile, Extrudate und Mehrschichtsysteme enthaltend eine Zusammensetzung nach einem der Ansprüche 1 bis 13.

15. Verwendung mindestens eines Isosorbiddiesters zur Verbesserung der optischen Transmission und/oder zur Senkung der Gleit- und Haftreibungskoeffizienten von Zusammensetzungen umfassend aromatisches Polycarbonat, gegebenenfalls Thermostabilisator und gegebenenfalls weitere Additive.

## Claims

1. Composition comprising
A) 20.0 wt% to 99.95 wt% of aromatic polycarbonate and
B) 0.05 wt% to 20.0 wt% of isosorbide diesters, with the proviso that, when the aromatic polycarbonate of component A) is one or more copolycarbonates containing at least the monomer units of the formula (1) 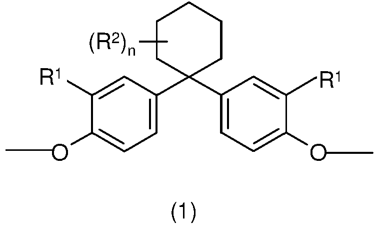
in which
R¹ is hydrogen or C₁-C₄-alkyl,
R² is C₁-C₄-alkyl, and
n is 0, 1, 2 or 3,
the composition comprises 0.05 to 7.5 wt% of component B) .

2. Composition according to Claim 1, **characterized in that** the composition includes, as component B), one or more isosorbide diesters which derive from one or more saturated or unsaturated monocarboxylic acids having a chain length of 4 to 30 carbon atoms.

3. Composition according to Claim 1 or 2, **characterized in that** the composition includes, as component B), one or more isosorbide diesters of the general formula (I) 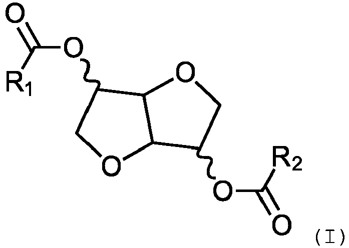 where R₁ and R₂ are each independently a saturated, branched or unbranched aliphatic radical of the formula CₙH₂ₙ₊₁ or a mono- or polyunsaturated, branched or unbranched aliphatic radical of the formula CₙH₂ₙ₋ₘ, where n is a number from 3 to 29 and m is 1, 3, 5, 7, 9 or 11.

4. Composition according to any of the preceding claims, **characterized in that** the isosorbide diester is derived from at least one carboxylic acid selected from the group consisting of caprylic acid, capric acid, lauric acid, myristic acid, palmitic acid, margaric acid, stearic acid, arachidic acid, behenic acid, lignoceric acid, palmitoleic acid, petroselic acid, oleic acid, elaidic acid, linoleic acid, linolenic acid, arachidonic acid, timnodonic acid and cervonic acid.

5. Composition according to any of the preceding claims, **characterized in that** the amount of isosorbide diesters is 0.05 to 15.00 wt%, with the proviso that, when the aromatic polycarbonate of component A) is one or more copolycarbonates containing at least the monomer units of the formula (1) 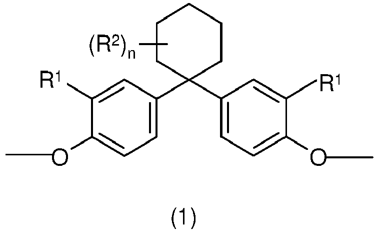 in which
R¹ is hydrogen or C₁-C₄-alkyl,
R² is C₁-C₄-alkyl, and
n is 0, 1, 2 or 3,
the composition comprises 0.05 to 7.5 wt% of component B).

6. Composition according to any of the preceding claims, **characterized in that** the amount of aromatic polycarbonate is at least 50 wt%.

7. Composition according to any of the preceding claims, consisting of the following components:
A) 82.0 wt% to 99.95 wt% of aromatic polycarbonate,
B) 0.05 wt% to 15.0 wt% of isosorbide diesters,
C) 0.0 wt% to 1.0 wt% of thermal stabilizer and
D) 0.0 wt% to 2.0 wt% of one or more further additives from the group of the antioxidants, demolding agents, flame retardants, UV absorbers, IR absorbers, antistats, optical brighteners, colourants from the group of the soluble organic pigments and additives for laser marking,
with the proviso that, when the aromatic polycarbonate of component A) is one or more copolycarbonates containing at least the monomer units of the formula (1) 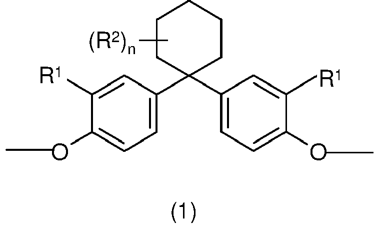 in which
R¹ is hydrogen or C₁-C₄-alkyl,
R² is C₁-C₄-alkyl, and
n is 0, 1, 2 or 3,
the composition comprises 0.05 to 7.5 wt% of component B) .

8. Composition according to any of the preceding claims, **characterized in that** the composition further comprises a thermal stabilizer.

9. Composition according to any of the preceding claims, **characterized in that** it has a transmittance in the range from 400 nm to 800 nm of at least 84%, determined according to ISO 13468 at a thickness of 4 mm, and a haze of < 5%, determined according to ASTM D1003 at a layer thickness of 4 mm.

10. Composition according to any of the preceding claims, **characterized in that** the composition includes, as component A, one or more copolycarbonates containing the monomer units of the formula (1) 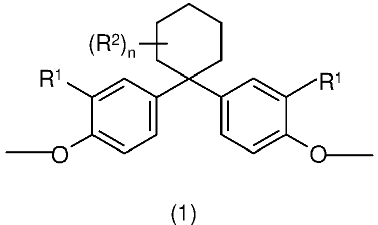 in which
R¹ is hydrogen or C₁-C₄-alkyl,
R² is C₁-C₄-alkyl, and
n is 0, 1, 2 or 3,
optionally in combination with a further aromatic homo- or copolycarbonate containing one or more monomer units of the general formula (2) 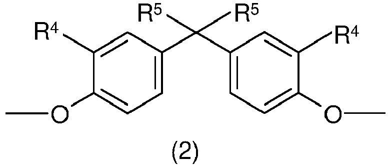 in which
R⁴ is H or linear or branched C₁-C₁₀ alkyl, and
R⁵ is linear or branched C₁-C₁₀ alkyl;
where the further homo- or copolycarbonate which is optionally additionally present does not have any monomer units of the formula (1).

11. Composition according to Claim 10, **characterized in that** the proportion of the monomer units of the formula (1a) in the copolycarbonate is 0.1-88 mol% (based on the sum total of the diphenol monomer units present in the copolycarbonate).

12. Composition according to Claim 10 or 11, **characterized in that** the copolycarbonate containing the monomer units of the formula (1) additionally contains monomer units of the formula (3) 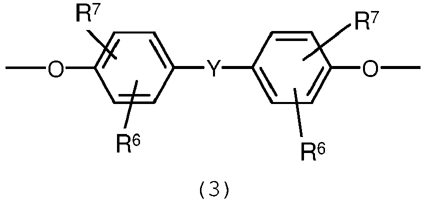 in which
R⁶ and R⁷ are independently H, C₁-C₁₈-alkyl, C₁-C₁₈-alkoxy, halogen or in each case optionally substituted aryl or aralkyl, and
Y is a single bond, -SO₂-, -CO-, -O-, -S-, C₁-C₆-alkylene or C₂-C₅-alkylidene, and also C₆-C₁₂-arylene which may optionally be fused to further heteroatom-comprising aromatic rings.

13. Composition according to any of Claims 9 to 11, **characterized in that** the composition comprises, as component A, a blend of the copolycarbonate containing the monomer units of the formula (1) and bisphenol A homopolycarbonate.

14. Moldings, extrudates and multilayer systems comprising a composition according to any of Claims 1 to 13.

15. Use of at least one isosorbide diester for improving the optical transmission and/or for lowering the coefficient of dynamic and static friction of compositions comprising aromatic polycarbonate, optionally thermal stabilizer and optionally further additives.

## Revendications

1. Composition contenant :
A) 20,0 % en poids à 99,95 % en poids d'un polycarbonate aromatique, et
B) 0,05 % en poids à 20,0 % en poids d'un diester d'isosorbide,
à condition que lorsque le polycarbonate aromatique du composant A) consiste en un ou plusieurs copolycarbonates contenant au moins les unités monomères de la formule (1) : 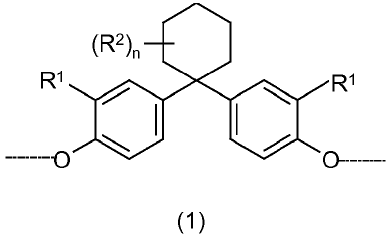 dans laquelle
R¹ représente l'hydrogène ou un alkyle en C₁-C₄,
R² représente un alkyle en C₁-C₄, et
n représente 0, 1, 2 ou 3,
la composition comprenne 0,05 à 7,5 % en poids du composant B).

2. Composition selon la revendication 1, **caractérisée en ce que** la composition comprend en tant que composant B) un ou plusieurs diesters d'isosorbide, qui dérivent d'un ou de plusieurs acides monocarboxyliques saturés ou insaturés ayant une longueur de chaîne de 4 à 30 atomes C.

3. Composition selon la revendication 1 ou 2, **caractérisée en ce que** la composition comprend en tant que composant B) un ou plusieurs diesters d'isosorbide de la formule générale (I) : 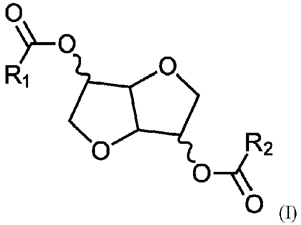 dans laquelle R₁ et R₂ représentent chacun indépendamment l'un de l'autre un radical aliphatique saturé, ramifié ou non ramifié, de la formule CₙH₂ₙ₊₁, ou un radical aliphatique mono- ou polyinsaturé, ramifié ou non ramifié, de la formule CₙH₂ₙ₋ₘ, n représentant un nombre de 3 à 29 et m représentant 1, 3, 5, 7, 9 ou 11.

4. Composition selon l'une quelconque des revendications précédentes, **caractérisée en ce que** le diester d'isosorbide dérive d'au moins un acide carboxylique choisi dans le groupe constitué par l'acide caprylique, l'acide caprique, l'acide laurique, l'acide myristique, l'acide palmitique, l'acide margarique, l'acide stéarique, l'acide arachidique, l'acide béhénique, l'acide lignocérique, l'acide palmitoléique, l'acide pétrosélinique, l'acide oléique, l'acide élaïdique, l'acide linoléique, l'acide linolénique, l'acide arachidonique, l'acide timnodonique et l'acide cervonique.

5. Composition selon l'une quelconque des revendications précédentes, **caractérisée en ce que** la quantité de diester d'isosorbide est de 0,05 à 15,00 % en poids, à condition que lorsque le polycarbonate aromatique du composant A) consiste en un ou plusieurs copolycarbonates contenant au moins les unités monomères de la formule (1) : 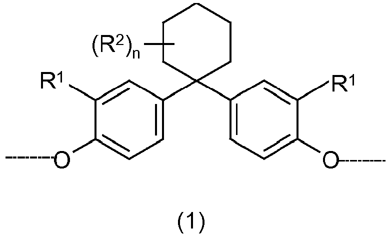 dans laquelle
R¹ représente l'hydrogène ou un alkyle en C₁-C₄,
R² représente un alkyle en C₁-C₄, et
n représente 0, 1, 2 ou 3,
la composition comprenne 0,05 à 7,5 % en poids du composant B).

6. Composition selon l'une quelconque des revendications précédentes, **caractérisée en ce que** la quantité de polycarbonate aromatique est d'au moins 50 % en poids.

7. Composition selon l'une quelconque des revendications précédentes, constituée par les composants suivants :
A) 82,0 % en poids à 99,95 % en poids d'un polycarbonate aromatique,
B) 0,05 % en poids à 15,0 % en poids d'un diester d'isosorbide,
C) 0,0 % en poids à 1,0 % en poids d'un thermostabilisateur, et
D) 0,0 % en poids à 2,0 % en poids d'un ou de plusieurs additifs supplémentaires du groupe constitué par les antioxydants, les agents de démoulage, les agents ignifuges, les absorbeurs UV, les absorbeurs IR, les antistatiques, les azurants optiques, les colorants du groupe des pigments organiques solubles et les additifs pour le marquage laser,
à condition que lorsque le polycarbonate aromatique du composant A) consiste en un ou plusieurs copolycarbonates contenant au moins les unités monomères de la formule (1) : 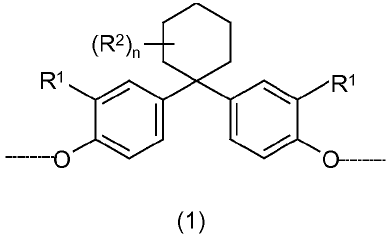 dans laquelle
R¹ représente l'hydrogène ou un alkyle en C₁-C₄,
R² représente un alkyle en C₁-C₄, et
n représente 0, 1, 2 ou 3,
la composition comprenne 0,05 à 7,5 % en poids du composant B).

8. Composition selon l'une quelconque des revendications précédentes, **caractérisée en ce que** la composition contient en outre un thermostabilisateur.

9. Composition selon l'une quelconque des revendications précédentes, **caractérisée en ce qu'**elle présente dans la plage allant de 400 nm à 800 nm une transmission d'au moins 84 %, déterminée selon ISO 13468 à une épaisseur de 4 mm, et un trouble < 5 %, déterminé selon ASTM D1003 à une épaisseur de couche de 4 mm.

10. Composition selon l'une quelconque des revendications précédentes, **caractérisée en ce que** la composition contient en tant que composant A un ou plusieurs copolycarbonates contenant les unités monomères de la formule (1) : 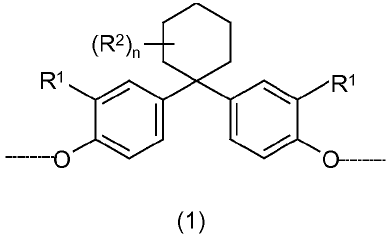 dans laquelle
R¹ représente l'hydrogène ou un alkyle en C₁-C₄,
R² représente un alkyle en C₁-C₄, et
n représente 0, 1, 2 ou 3,
éventuellement en combinaison avec un homo- ou copolycarbonate aromatique supplémentaire, contenant une ou plusieurs unités monomères de la formule générale (2) : 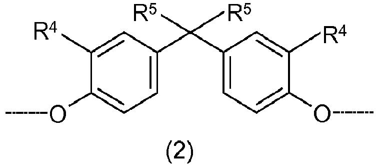 dans laquelle
R⁴ représente H ou un alkyle en C₁-C₁₀ linéaire ou ramifié, et
R⁵ représente un alkyle en C₁-C₁₀ linéaire ou ramifié ;
l'homo- ou le copolycarbonate supplémentaire éventuellement en outre présent ne comprenant pas d'unités monomères de la formule (1).

11. Composition selon la revendication 10, **caractérisée en ce que** la proportion des unités monomères de la formule (1a) dans le copolycarbonate est de 0,1 à 88 % en moles (par rapport à la somme des unités monomères diphénol contenues dans le copolycarbonate).

12. Composition selon la revendication 10 ou 11, **caractérisée en ce que** le copolycarbonate contenant les unités monomères de la formule (1) contient en outre des unités monomères de la formule (3) : 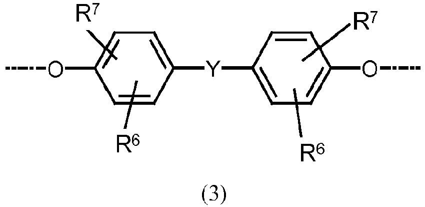 dans laquelle
R⁶ et R⁷ représentent indépendamment l'un de l'autre H, alkyle en C₁-C₁₈, alcoxy en C₁-C₁₈, halogène, ou aryle ou aralkyle, chacun éventuellement substitué, et
Y représente une simple liaison, -SO₂-, -CO-, -O-, - S-, alkylène en C₁-C₆ ou alkylidène en C₂-C₅, ainsi qu'arylène en C₆-C₁₂, qui peut éventuellement être condensé avec des cycles aromatiques supplémentaires contenant des hétéroatomes.

13. Composition selon l'une quelconque des revendications 9 à 11, **caractérisée en ce que** la composition contient en tant que composant A un mélange du copolycarbonate contenant les unités monomères de la formule (1) et d'un homopolycarbonate de bisphénol A.

14. Pièces moulées, extrudats et systèmes multicouches contenant une composition selon l'une quelconque des revendications 1 à 13.

15. Utilisation d'au moins un diester d'isosorbide pour améliorer la transmission optique et/ou pour abaisser les coefficients de glissement et de frottement statique de compositions comprenant un polycarbonate aromatique, éventuellement un thermostabilisateur et éventuellement des additifs supplémentaires.
